(19) Europäisches Patentamt
European Patent Office
Office européen des brevets

(11) **EP 1 818 863 A1**

(12) **EUROPEAN PATENT APPLICATION**

(43) Date of publication:
**15.08.2007 Bulletin 2007/33**

(51) Int Cl.:
***G06Q 10/00*** (2006.01)

(21) Application number: **05028083.3**

(22) Date of filing: **21.12.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Deutsche Post AG
53113 Bonn (DE)**

(72) Inventors:
• **Bruno, Jens**
  **1410 Waterloo (BE)**
• **Dalmalm, Maria**
  **1410 Waterloo (BE)**
• **Strömqvist-Baathe, Karin**
  **53343 Villip-Wachtberg (DE)**

(74) Representative: **Jostarndt, Hans-Dieter
Brüsseler Ring 51
52074 Aachen (DE)**

(54) **Method for transporting physical objects, transportation system and transportation means**

(57)     The invention relates to a method for transporting physical objects, wherein at least one physical object is transported from a sending station to a receiving station, wherein the transport occurs through at least one physical router, wherein the physical router executes a decision about further parameters of transport to another physical router or to the receiving station, characterised in that information for handling and moving the physical object is generated and/or implemented in the decision about the further parameters of transport with reference to environmental data.

The invention further relates to a transportation system, a transportation means, a physical router, a computer program and a computer program product, which allow carrying out processes with regard to environmental data.

Fig.1

## Description

The invention relates to the problem of optimizing the transport of physical objects.

The International patent application with the International publication number WO 03/035282 A2 and the corresponding European patent EP 1 455 959, entitled to the Deutsche Post AG, describe a method for processing objects wherein information located on at least one surface of the object is detected. The processing of the objects is characterized in that address information determined by means of the information located on the surface of the object is compared with available address information in a databank or in a database drawn up there from.

The International patent application with the International publication number WO 03/048986 A2 describes a method and a system for calculating an environmental score for a business unit. Calculated and presented are especially the emissions generated. Some kind of efficiency ration could also be presented e.g. gram CO2 per tonkm This document includes a computer system for calculating a score from a separately accountable business unit, the score being indicative of a level of unaccounted for external environmental cost of economic activities of the separately accountable business unit. This system comprises accessing means for accessing accounts data indicative of recognized costs for the separately accountable business unit and accounts processing means for processing the accounts data by adding external environmental costs to the recognized costs, and for calculating the score for the separate accountable business unit using the processed accounts data.

The United States patent application US 2005/0021389 A1 also describes a method and a system for calculating an environmental score for a business unit. It also includes a computer system for calculating a score for separately accountable business units, the score being indicative of a level of unaccounted for external environmental cost of economic activities.

The United States patent publication US 200510052810 A1 describes a method and an apparatus for calculating an environmental indicator and recording medium with calculation program recorded there on. According to this document data base and data table are stored in a memory. The data base has data associated with the part lists and product specifications of products in conjunction with products identification codes, whereas the data table has processing yields and environmental indicator factors in conjunction with material codes which respectively indicate the material of each part constituting a product. Afterwards processing yield and environmental indicator factor for every material code are calculated by referring the data table, the material codes relating to the parts corresponding to the part numbers which have been extracted.

It is an object of the current invention to integrate a calculation of environmental costs in a transportation system.

This problem is solved advantageously by the method of claim 1, the transportation system of claims 6 and 8, the transportation means of claim 9, the physical router of claim 10, the computer program of claim 11 and the computer program product of claim12.

Claims 2 to 5 and 7 contain advantageous improvements of the invention,

The invention relates to a method for transporting physical objects, wherein at least one physical object is transported from a sending station to a receiving station, wherein the transport occurs through at least one physical router, wherein the physical router executes a decision about further parameters of transport to another physical router or to the receiving station.

The invention relates furthermore to a Transportation system for transporting physical objects, wherein at least one physical object is transported from a sending station to a receiving station, wherein the transport occurs through at least one physical router, wherein the physical router executes a decision about further parameters of transport to another physical router or to the receiving station, wherein environmental data of the transport is calculated and displayed.

An advantageous implementation of the method, the transportation system, the transportation means, the physical router, the computer program and the computer program product according to the invention is characterized in that information for handling and moving the physical object is generated and/or implemented in the decision about the further parameters of transport with reference to environmental data.

Environmental according to the invention means especially any biological, chemical or physical interaction between a system studied and the environment, defined in terms of the extraction of natural resources, substances emissions to the environment media (air, soil, superficial and ground water), space occupied by waste and plant, as well as any disturbance...."

The physical router may be a means with a routing and/or a switching function.

The properties of the physical router depend on the objects witch are handled.

The invention further relates to a transportation system for the transport of physical objects, wherein the transportation system contains means for transport of at least one physical object from a sending station to a receiving station, wherein the transportation system contains at least one physical router, wherein the physical router is capable of executing a decision about further parameters of transport to another physical router or to the receiving station.

Physical objects are any objects, which can have an effect in the physical world. They are most preferably massive bodies of any size, ranging from less than one gram up to several tons.

Examples of the objects are postal deliveries as letters, parcels and packets, any object that can be transported on transport pallets or transport container as well as the transport pallets and the transport containers themselves.

The invention especially relates to the transport of objects of any size, weight or dimension. The objects can be units, but they are not limited to units.

The invention also relates to transportation means and physical routers.

Transport of various goods in complex systems requires special control mechanisms.

Advantageous control mechanisms for the delivery of package, for example within companies or to customers are very much based on logistics and workflow management systems, e.g, the Workflow Management Coalition, WFMC. Several companies are working on dedicated software for package delivery systems.

Further examples of package delivery systems where sophisticated logistics and workflow management systems are being used are luggage transport at airports, mail sorting and distribution and computer aided manufacturing in big production companies (e.g. car manufacturing).

It is advantageous to combine the present invention with known package delivery systems in order to add advantageous known services (such as system malfunction handling, status handling, priority based routing, etc.).

Preferable embodiments of the invention contain different environmental data.

One example of environmental data according to the invention are environmental impact data.

This is structured information about at least one parameter which has influence on the environment; for example: Weight of the physical object.

Another example of environmental data according to the invention are environmental requirement data. It is furthermore possible to add other information related to the specific shipment or vehicle.

This means structured information about environmental requirements of the transport.

Furthermore, the invention contains the concept that the routing is performed with reference to environmental performance data of transport means.

The invention implements an analysis of the environmental performance data.

It is possible to determine over all environmental performance data, for example by regarding the typical emissions of a transportation vehicle for each transported weight unit.

It is even more advantageous to implement specific environmental performance data.

An example of more specific environmental performance data are emission and energy consumption values of each single transportation device used.

For example it is possible to implement a check if freight vehicle fulfills the emission criteria according to Euro III or Euro IV category.

However, it is even possible to determine the specific environmental performance data for each type of vehicle used. It is furthermore possible to install fuel-measuring devices and/or continuously register the loading factor. It is also possible keeping track of positioning using GPS. The information is advantageously continuously communicated to a central database through GSM or GPRS. In this way, each vehicle and the onboard transport could be monitored using real time values. In addition, the emissions could be presented in means of geographical impact.

In an advantageous implementation of the method, the transportation system, the transportation means, the physical router, the computer program and the computer program product, routing information contain information about environment standards; the routing information is integrated in the routing of the objects; the routing information may accompany the physical object in different ways: Imprints on a surface of the objects or a label attached thereon, transponder with routing information.

As the environmental performance data of the transportation means influences the resulting environmental impact data, it is advantageous to implement the environmental performance data in the routing information.

The routing information may contain further elements for carrying out the routing and the subsequent transport, for example a delivery address or an alternative delivery addresses, or information about a transportation time/time to delivery.

The Invention allows determining the effect of transport processes on the environment.

In further advantageous embodiments, the invention includes generating and/or presenting reports on generated and/or expected emissions but not their effect on the environment.

Furthermore, the invention allows carrying out transport processes according to environmental requirements.

The invention enables the following advantages:

- Detailed Emission Reporting for a transport carrier or each single transport process

- Reporting done on Customer basis, independent of where the transaction has taken place

- Emission Reporting delivered as soon as a reporting period has ended (e.g. yearly, quarterly or monthly) with high quality/accuracy. Advantageously this takes place in the middle of the following month to allow systems to be corrected.

- Emission Reporting delivered in alternate ways and formats

- Proactive calculation tool for Emission

Advantageous implementation of the invention includes the following advantages:

- To deliver Environmental Performance Report

    o with less manual management
    o with higher quality
    o at lower costs than existing manual routines

- To build a solution that can live for a number of years and that can be the foundation for a global environmental tool

- One-stop-shopping i.e. reporting on environmental issues is done, independent of way of transportation.

From this database reports will be generated and also analysis of a more dynamic nature.

This output is to be of higher quality and easier, faster access thus meeting customer demands, at a lower cost.

The environmental impact data and the environmental requirement information can be implemented in various ways.

In one implementation of the invention at least a part of the environmental impact data is included in a computer that stears functions of at least one of the physical routers.

In an advantageous implementation of the method, the transportation system, the transportation means, the physical router, the computer program and the computer program product, a computer connected to the physical router is capable of combining physical impact data of transportation means with transportation relevant parameters of the physical objects.

Examples for the transportation relevant parameters are the weight and/or the size of the respective physical object.

This advantageous implementation of the invention could include the additional advantageous further parameters of the transport, for example requirement for keeping the physical objects within a certain temperature range.

The invention allows multi-parameter based calculations for carrying out the routing of the physical objects and their subsequent transport.

Without limiting the scope of the invention this example can be explained with respect to the following example:

After vintage and subsequent vinification wine is transported to costumers.

For example the Beaujolais and Beaujolais Villages have undergone short maceration and have attained the required characteristics for Beaujolais Nouveau, are analysed, filtered and bottled. Everyone can enjoy them from the 3rd Thursday in November.

Known concepts allow to fulfill already implemented requirements for the transport process as the time of delivery and the demands of keeping the wine in a certain predefined temperature range and to protect it from transportation hazards.

To operate such complexed logistic processes it is helpful to implement effective communication means.

An example for a high!y defective communication means is any communication network based on the internet protocol.

The Internet Protocol is based on data packets, with a maximal length, which is according to the IPv4 standard 64 Kbyte and variable according to the IPv6 standard. Larger data packets are transferred by a plurality of data packets. Each data packet is a fragment of the whole information and travels its own way through the network. As the Internet Protocol does not constitute a connection along which the data packets are transported, it is necessary that every data packet contains the source and target address. The correct sequence of the IP data packets is achieved at the transport service of a higher layer. According to the IPv6 standard all data packets may be routed the same way by using flow label routing. This is similar to virtual circuits.

The routing algorithm is responsible for deciding which output line and incoming data packet should be transmitted on. If the subnet uses datagrams internally, this decision must be made anew for every arriving data packet since the best route may have changed since last time. If the subnet uses virtual circuits internally, routing decisions are made only when a new virtual circuit is being set up. Thereafter, data packets just follow the previously established route.

Due to the enormous growth of the Internet and the number of subscribers, the Internet Protocol (IP) is widely deployed, IP is the network layer protocol for the internet and lots of other networks, IP, together with several additional protocols for example such as Open Shortest Path First (OSPF) and Internet Control Message Protocols (ICMP) is one among many examples to provide the afterwards described services.

Examples of these services are end-to end data transport, addressing, fragmentation and reassembly, routing and congestion control.

The IPv6 standard is one among many standards which are capable to provide the afterwards mentioned additional services. These services include an improved security handling which guarantees authentication and privacy, an enhanced type of service based routing, a flow label routing which is similar to virtual circuits and an unlimited amount of IP addresses including an improved hierarchical addressing scheme,

Logistics systems manage the purchase, production and delivery/sales of products. Several logistic systems are available. Examples of these logistics systems are Enterprise Resource Planning (ERP) and Material Requirements Planning (MRP I and II).

Advantageous logistics options are just-in-time delivery, job-shops, flow-shops, Group-Technology cells, push/pull control, material-, capacity- and time-based control. Furthermore, a feedforward and/or a feedback control is possible. Further advantageous logistics options include engineering to Order, Make to Order, Assemble to Order, Make to Stock.

A further object of the invention is a transportation system for transporting physical objects, wherein at least one physical object is transported from a sending station to a receiving station, wherein the transport occurs through at least one physical router, wherein the physical router executes a decision about further parameters of transport to another physical router or to the receiving station, wherein environmental data is used for handling and/or moving at least one physical object.

Although many implementations of the invention do not need any protocol functionality, other advantageous implementations of the invention include protocol functionality.

The protocol functionality is added to at least one machine that takes care of a physical routing of the physical objects.

In a preferred embodiment of the method, the transportation system, the transportation means, the physical router, the computer program and the computer program product, at least one routing mechanism is used.

In an advantageous implementation of the method, the transportation system, the transportation means, the physical router, the computer program and the computer program product, Internet Protocol Addresses are transferred to data link addresses.

In an advantageous implementation of the method, the transportation system, the transportation means, the physical router, the computer program and the computer program product, at least one gateway routing protocol is used.

In an advantageous implementation of the method, the transportation system, the transportation means, the physical router, the computer program and the computer program product, a packet-scheduling algorithm is used,

In a preferred embodiment of the method, the transportation system, the transportation means, the physical router, the computer program and the computer program product, the packet scheduling is performed with Weighted Fair Queuing.

Weighted Fair Queuing is a packet-scheduling algorithm used in routers. The mechanism uses a kind of byte-by byte round robin in order to handle several input queues for a certain output queue. The scheduling considers different priority levels.

In an advantageous implementation of the method, the transportation system, the transportation means, the physical router, the computer program and the computer program product, at least one virtual private network (VPN) is used.

A virtual private network (VPN) is a private network in a public wide area network, meaning that it is solely dedicated to serve a company or companies of its own. A VPN is shielded off from the rest of the traffic on a public wide area network (WAN).

In a preferred embodiment of the method, the transportation system, the transportation means, the physical router, the computer program and the computer program product, differentiated services are used.

It is preferable to implement differentiated services to fulfill different environmental requirements of the transport.

For example: Some customers like to transport the physical objects with low emissions.

For transporting the physical objects of the customers it is useful to use low emission vehicles.

Alternatively it is possible to implement a trade for emission credits, for example carbon credit for example according to the Climate Corporation's EU Emission Trading Services. Assists companies affected by the EU Emission Trading Scheme (EU ETS) in selling or buying carbon credits. This implementation provides companies with the means to efficiently manage allowance positions.

In an advantageous implementation of the method, the transportation system, the transportation means, the physical router, the computer program and the computer program product, a control protocol is used.

In the following advantageous implementations of the invention will be further described by means of examples and by means of the figures:

Fig. 1      shows a system overview of a platform based implementation of the invention.

Fig. 2      shows a functional view of implementations according to a preferred embodiment of the invention.

Fig. 3      shows advantageous databases for carrying out the invention.

Fig. 4      shows a preferred import of files and tables in a system according to the invention.

Fig. 5      shows preferred embodiments of data modules according to the invention.

Fig. 6      shows a screenshot of a desktop of a computer carrying out a program according to a preferred implementation of the invention.

Fig. 7      shows a screenshot of a desktop of a computer with a graphical user interface (GUI) according to the invention.

Fig. 8      shows two screenshots of a desktop of a computer carrying out a program according to a preferred implementation of the invention.

Fig. 9      shows another screenshot of a desktop of a computer carrying out the program according to the preferred implementation of the invention.

Fig. 10     shows another screenshot of a desktop of a computer carrying out the program according to the preferred implementation of the invention.

Fig. 11     shows an example of output data (emission report) generated according to a preferred embodiment of the invention.

Fig. 12     shows a schematic representation, how transactions from different operational systems are managed via a defined interface, where the transactions are updated/corrected/verified before they are entered in to the database.

Fig. 13     shows a schematic representation, how the Air transactions from the production system are managed.

The examples use and adapt the environmental data in order to be able to handle the distribution of physical packages.

However, it is also an object of the invention to implement retrieving and/or reporting functions in order to analyse and/or predetermine environmental impacts of transport processes.

Such a first preferred embodiment is afterwards described with regards to Fig, 1.

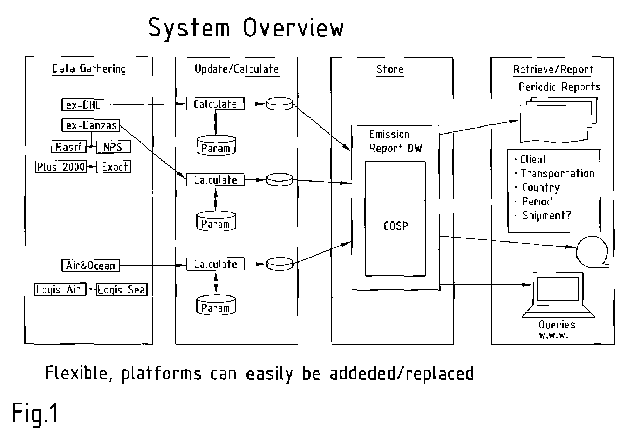

Fig. 1 shows a preferred system overview.

The embodiment according to Fig. 1 contains four basic modules: a data-gathering module, an updating/ calculating module, a storing module and a retrieving/reporting module.

It is advantageous to perform a gathering of environmental data, especially of environmental performance data and - resulting - environmental impact data for different carriers.

The described example contains the names of several existing and operating transportation and logistic companies like DHL Express and DHL Danzas Air and Ocean. Examples of information technology production systems are: Rasti, NPS, +2000, Exact, , LOGIS R and LOGIS C.

These names are only used to show, that the invention can be carried out with different carriers. The names of the carriers do not limit the scope of the invention.

It is possible to carry out the invention in any transportation system, respectively any information technology production system.

The gathered data are transferred to module for updating and/or calculating the environmental data.

A calculation is performed with regard to respective parameters.

The updated and/or calculated data are transferred to a storing module.

The storing module can be implemented in different configurations.

The depicted Implementation shows a preparation of an emission report according to the stored data.

This implementation is especially advantageous to inform users of the transport system about the environmental impact of transport.

However it is also possible to use the stored data for one or more of the described routing and/or transportation processes.

Therefore, it is especially advantageous to implement at least a part of the stored environmental data in a logical node or a computer connected to a physical router.

It is even more preferred to use the stored data for the routing and/or transport as well as for the retrieving and/or report as it is described in the right part of Fig. 1.

The data retrieving and/or report allow reports for each transport process as well as periodic reports. The reports can be analyzed according to one or more of the following categories: Client, customer id, transportation (e.g. km, ton, tonkm), country, period of time, different emissions, energy use.or shipment.

Especially advantageous is a flexible report out take with parameters chosen individually. Examples could be for specific relations, listing of euro classes of transportation means.

Within preferred embodiments the environmental data are incorporated into the routing mechanisms in order to make the corresponding routing decisions. Furthermore, a mechanism is advantageous to be able to track the packages.

A transport system like a mail delivery system can use the environmental data to internally sort and distribute letters and packages to the correct truck for delivery. The size, due date etc. of each letter and package are determined.

Furthermore, an appropriate truck is identified by comparison between ecological requirements of the transport and environmental performance data of the truck.

Alternatively another preferred embodiment of the invention includes flexible mechanisms meaning that we promise to some where in the transport system to transport the agreed transport volume. This might change if alternative fuels and trucks are easily available.

Information about the environmental requirement data is used to accompany the letter and package and to deliver the package to the correct destination, It is also possible to add environmental requirement data to each letter and package. However, in this case scanners are needed.

Externally the same mechanisms may apply. Whereas the letters and the packages are distributed via other networks, the environmental requirement data may accompany the letters and packages via any appropriate communication network as for example the Internet. This environmental requirement data is then used to make routing decisions.

A further implementation of the invention relates to a computer integrated manufacturing company. In a computer integrated manufacturing company the routing of construction parts and tools may be done with regard to environmental requirement data and/or environmental performance data.

Once the size, the due date/time, the environmental impact data and the destination are determined, a communication packet that takes care of the routing accompanies the construction parts and tools.

Weighted fair queuing may be used to speed up and delay construction parts and tools. Basically this means that construction parts and tools are stored in physical buffers (warehouses etc.).

Through flow control mechanisms it is possible to adapt parameters, especially transport capacities of the transportation system to the need of the users.

If the goods can be separated, segmentation and from time to time a reassembly may be executed. The segmentation is for example performed at the sending station or at one or more of the mechanical routers.

The different packages which are transported have different sizes, masses and should meet different needs. The different needs are most preferably reflected in special Quality Of Services (QOS) mechanisms. QOS specifications are for example environmental performance data of the transport means, and/or a fast or a secure delivery. Most preferably the QOS specifications are categorised, for example according to special categories, which represent for example goods which have to be handled according to specific environmental requirement data.

The environmental requirement data are an example of especially advantageous quality of service specifications.

However it is possible that further aspects are used for the quality of service, for example a desired speed of transport,

So the mention can be carried out without usage of protocols some implementations of the invention can be further improved by implementing protocol mechanisms.

The protocol mechanisms can be used to do traffic management. For example in case of congestion, a routing protocol could determine, especially in real-time, a different route and router the car by sending signals to the receiver in the car. An interface from the router to a traffic control system is used.

In the following the invention will be described by different concepts with different connections between actual machines and routing network.

The environmental data according to the invention especially the environmental impact data, the environmental requirement data and the environmental performance data can be implemented in various ways into the transportation procedure.

As described it is especially advantageous to implement environmental data into the routing of the objects. However it is as well possible to use the environmental data for planning the transport process and/or for calculating the environmental impact of a certain transport.

To include environmental figures into the route planning tools is especially advantageous for a comparison between different modes of transports or linked to geographical restrictions/concerns e.g. in especially polluted areas.

If the route planning concerns one mode only e.g. truck transports, its' objective goes hand in hand with environmental concern. Higher efficiency means lower environmental impact per shipment.

It is possible to use more centralized implementations of the inventions.

More centralized versions of the invention include central planning and/or stearing of transport and/or calculation procedures,

However it is also advantageous to use decentralized implementations of the invention.

Such decentralized implementations of the invention can for example be carried out in the following way:

The invention especially covers the following embodiments:

- separating the goods flow of ordinary shipments and environmentally friendly shipments. This requires an at least partly parallel system.

- Implementing "green shipments" which build on flexibility that is the shipment itself may be transported using ordinary routines but somewhere in the transport system a corresponding volume is transported in a "green way".

Environmental requirement data accompany the physical objects. This is for example possible by adding digital information to the physical objects, for example by printing codes and/or writing information to transponders.

The physical routers are connected to a database which contains environmental performance data of transport means which are accessible by the routers.

Examples for different transport means for one router are different trucks that operate from a cargo centre.

Examples for accompanying the physical packages with logical packets are labels or transponders attached to the physical objects.

The labels and/or the transponders may contain a various data suitable for logistic processes.

Examples for these data are identification information about the physical object, a delivery address, a sender address and charging relevant information as for example digital franking marks.

Especially advantageous implementations of the current invention propose to add to this data environmental data, for example environmental impact data and/or environmental requirement data.

Whenever a physical object is received in a router, the router informs the machine on what to do and waits for a confirmation that the actions have been executed.

The embodiments described above can be combined with each other or with any of the embodiments described before.

The described examples of transportation systems that are designed and/or operated according to the invention show that the invention can easily be adapted to other transportation systems. Therefore the invention is not limited to a special transportation system.

The invention furthermore relates to methods for processing postal deliveries as letters, parcels and packets, transport pallets or transport containers,

A preferred embodiment of the invention involves a detection of information present on at least one surface of the physical object in such a way that, on the basis of the information present on the surface of the physical object, environmental data, for example environmental requirement data is used for the routing and/or for analysis and/or representation and/or for a compensation by transporting a corresponding volume in a "green way" that means with less impact on the environment.

An example of the implementation of the environmental data is a direct printing on the mailpiece. However, it is also possible to first print a medium, for example, a label, and to subsequently apply it onto the physical object.

This is advantageous to increase customer satisfaction and realization of the green shipment. It is possible but not necessary to use the environmental data for any sort of sorting or routing purposes.

The neutralization of the emission will in one advantageous implementation be done through compensation rather than reduction at the source. At least for our air shipments where no alternative fuels are available.

The term "environmental data" is by no means to be understood in a limiting fashion and especially comprises all depictions of data in an optically recognizable and/or machine-readable form that can be used for sorting, transporting or delivering the physical object.

An especially advantageous embodiment of the method is characterized in that the physical object are processed within the scope of a two-stage process, whereby the physical objects are already completely coded in the source region and undergo preliminary sorting according to target regions in a first sorting step.

In an advantageous embodiment the physical objects undergo fine sorting into smaller units in another sorting procedure.

Moreover, it is advantageous for the environmental data, for example the environmental requirement data, to be applied onto the physical object as a barcode.

In any case it is simultaneously appropriate to include the environmental data, for example the environmental requirement data in a transponder which is attached to the physical objects or a transport unit containing the physical objects.

The coding, or the labelling, is preceded by determination of the environmental requirements in which the environmental impact data are found on the basis of the recognizable environmental performance data by means of linked files from the data, including a conversion file.

The invention also comprises a device for processing physical objects.

Additional advantages, special features and practical refinements of the invention ensue from the subclaims and from the following presentation of preferred embodiments of the invention making reference to the drawings.

Afterwards an especially advantageous implementation of the invention is described as an ACCEPT-Implementation.

The preferred ACCEPT-Implementation includes an Automatic Customer Calculation of Environmental Performance Tool.

The idea of ACCEPT is to produce Emission reports for customers and operators. Those reports will describe the amount of Emissions a specific customer's shipment has produced for a specific period.

In order to facilitate the explanation of the ACCEPT-Implementation of the invention the following definitions are used:

Definitions

| Term | Explanation |
|---|---|
| ACCEPT | This system used to calculate emission values. |
| FuelMixID | The definition of a specific usable mix of ingredients used by a vehicle |
| ProductID | The ID for a Shipments Product, Ex Stycke, Parti, Exact. |
| T-Web | Transporters-Web, external system for handling operators and vehicles |
| Volume Weight | The weight for a shipment |
| City-to-city | City-to-city, postal code-to-postal code, Air terminal-to-air terminal or any combination |
| Vehicle | A vehicle individual used to transport a shipment. |
| VehicleType | A type of vehicle used when we don't know which in divide that was transporting the shipment. |
| Operator | The organization or company that is transporting the shipment. |
| Node | One point to calculate a distance from. |
| Leg | A distance between two Nodes. |
| CoSP | One of the Shipment data providers used for ACCEPT. |
| EmissionValue | The amount of an emission of a specific type that is produced when a specific amount of a specific FuelMix is consumed. |

| | |
|---|---|
| Shipment | the total transportation service bought by the customer, the transportation of goods from location A to location B |
| Transport | the transport work done by a vehicle used for one leg in the shipment. |
| Leg | the smallest part of the shipment in the transport chain, the part where the same vehicle has the transported gods as its load, e.g. between two terminals |
| Vehicle | the means of transportation used, e.g. air plane, lorry, distribution van etc. |
| Parcel | the smallest defined part of the total shipment bought by the customer |

| | |
|---|---|
| Super user | An internal user with better access to the functions within the system and who should function as 1:st line support for all users, within a country. |
| Internal User | DHL user who not is a Super user, limiting the access rights in ACCEPT |
| External User | Any user who is not Super user or Internal user, further limiting the access rights in ACCEPT |
| Volume Weight | A calculation of the "cost" in the transport chain for this shipment from the customer. The value is a combination of the weight and the volume and is also used for setting the price to the customer. |
| Max Load Weight | The maximum weight carried by a vehicle, used together with Volume Weight to define the shipments part of the available capacity. |
| Fill Factor | A value defining to what extent the available capacity is used, also called Utilization Factor. Given as a percentage of the total capacity e.g. 74 % fill factor declares that the vehicle is 26 % empty. |
| Fixed Emission Value | In some calculations e.g. calculation Air emissions. there is a fixed emission value independent of the distance e.g. take off and landing. |
| Variable Emission Value | In all calculations, there is an emission value totally depending of the distance. |
| Distance | The amount of kilometers the shipment is transported. |
| Fuel Consumption | The amount of fuel used per distance unit, normally liters per kilometer. Used for calculating the base fuel consumption for a shipment. |
| Utilization Factor | see Fill Factor. |

The ACCEPT system is for example useful to calculate emissions for shipments. The calculation is performed, in brief by multiplying the distance, weight and the emission values for a specific engine model. One instance of ACCEPT is meant to serve one country's all shipments, domestic, international, air and so on.

Distance calculations

The system calculates the distance for a shipment in different ways:

1. City-to-city distance.
2. Terminal distance plus pickup and distribution distances.

The method to use is chosen by the ProductID term in the Shipment.
The fuel consumption, max load weight and fill factor for a vehicle and operator is imported from an external system, which is for example called T-Web, or set to a default value defined by ACCEPT. The fuel consumption for a specific shipment can be set in one of three values.

| Quality level | Description |
|---|---|
| Vehicle- fuel consumption, max load weight, fill factor and engine model | If we know which vehicle that transported the shipment and the vehicle is registered in T-Web then use data from the vehicle |
| Operator-fuel consumption, max load weight, fill factor and engine model | If we know which operator that transported the shipment and the vehicle is registered in T-Web then use data from the operator |

(continued)

| Quality level | Description |
|---|---|
| Vehicle type-fuel consumption, max load weight, fill factor and engine model | If we do not know, vehicle nor operators then use data from a default vehicle type. This type depends on which type of transport that is performed, e g city-to-city, terminal, distribution or pickup |

Emission calculations

This section describes the different ways to calculate emissions for shipments.
Exact

$$Factor = VolumeWeight/(MaxLoadWeight*FillFactor)$$

$$TransportEmission = FuelConsumption*LegDistance*EmissionValue * Factor$$

$$ShipmentEmission = TransportEmission + n1$$

Stycke, Parti, Air Express and International

$$Factor = VolumeWeight/(MaxLoadWeight*FillFactor)$$

$$TransportEmission = FuelConsumption*City-to-city-distance*EmissionValue * Factor$$

$$ShipmentEmission = TransportEmission$$

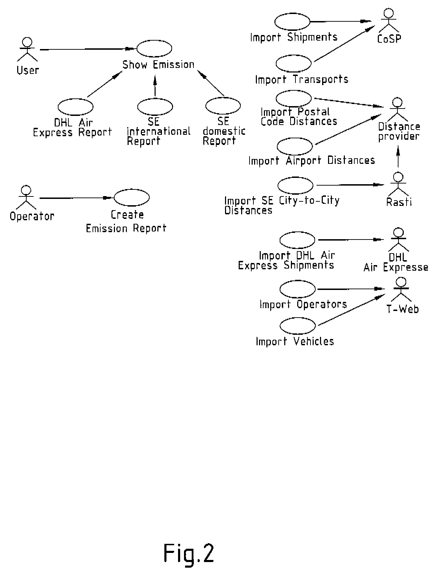

A functional view of implementations according to the ACCEPT system is depicted in Fig. 2.

Functional view

| Role | Description |
|---|---|
| *User* | Abstract user that is interested in a Emission Report |
| Operator | The operator of the ACCEPT system |
| CoSP | Provider of National shipments |
| T-Web | Provider of National road operators and vehicles |
| DHL Air Express | Provider of National air shipments |
| Rasti | Provider of National h city-to-city distances |

(continued)

| Role | Description |
|------|-------------|
| *Distance provider* | Abstract distance provider |

| Use-Case | Description |
|----------|-------------|
| *Show Emission* | Abstract Emission report |
| DHL Air Express Report | Report for Air Express shipments |
| SE international report | Report for SE international shipments |
| SE domestic report | Report for SE domestic shipments |
| Import shipments | Imports shipments from CoSP |
| Import transports | Imports Transports from CoSP |
| Import postal code distances | Imports International postal code distances (not impl.) |
| Import Airport distances | Imports Airport distances (not impl.) |
| Import SE city-to-city distances | Imports SE city-to-city distance from Rasti |
| Import DHL Air express shipments | Imports DHL Air express shipments |
| Import Operators | Imports SE road Operators from T-Web |
| Import Vehicles | Imports SE road Vehicles from T-Web |

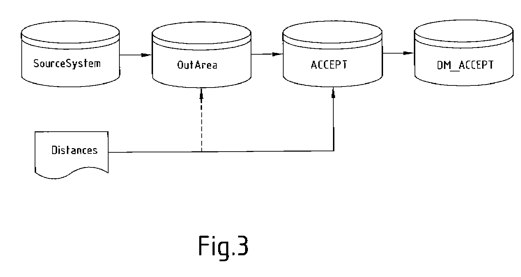

Advantageous databases for carrying out the invention are depicted in Fig. 3. The following table contains examples of these databases

| Database | Description |
|----------|-------------|
| *Distances* | Different distance providers |
| *Source system* | The Shipments and Transports provider (CoSP, DHL Air Express) |
| OutArea | An inter-storage area where the Source system places the exported Shipments and Transports for the period to be calculated. From this area ACCEPT reads the generic tables ACCEPT_Shipment and ACCEPT Transport. |
| ACCEPT | The Data Warehouse for ACCEPT. Contains Shipments, Transports, Emissions, Customer information and Distances for all source systems and all periods. |
| DM_ACCEPT | The Data mart for ACCEPT. Contains the aggregated rows on a Customer for a period, emission and product type. |

Execution order to create reports

The table Parameters in ACCEPT contains run parameters for ACCEPT. The parameter Period is used to set the month for which a report will be created by the stored procedures.
Representation of how the data is imported from the production systems, calculated and moved to the reporting database by the use of stored procedures; is described afterwards in more detail.
The following table describes the execution order to create different reports.

| D | I | AE | SP Name | Description | DB | Tables |
|---|---|----|---------|-------------|----|---------| 
| 1 | | | spOut-Shipment-Transport | Copies Shipments and Transports from DWH xFile and Transport to OutArea (Source system ID =1) | DWH **OutArea** | xFile Transport **ACCEPT_ ShIpmany ACCEPT_ Transport** |
| | 1 | | spOut_SE_I NT_ Shipment Transport | Copies Shipments and Transports from DWH xFile and Transport to OutArea (Source system ID =3) | DWH **OutArea** | xFile **Transport ACCEPT_ ShIpmeny ACCEPT_ Transport** |
| | | 1 | spOut_SE_ AE_ Shipment Transport | Creates Shipments and Transports from SE_Inbound and SE_Outbound. SE_ Inbound and SE_ Outbound are currently loaded by a DTS package that is loading an Access database, se Imports section. | OutArea **OutArea** | SE_Inbound SE_ Outbound **ACCEPT_ Shipment ACCEPT_ Transport** |
| 2 | | 2 | spLoad-Shipment | Copies Shipments from OutArea to ACCEPT | OutArea **ACCEPT** | ACCEPT_Shipment **Shipment** |
| | 2 | | spLoad_SE _INT_ Shipment | Copies Shipments from OutArea to ACCEPT | OutArea **ACCEPT** | ACCEPT_Shipment **Shipment** |
| 3 | 3 | 3 | spLoad-Transport | Copies Transports from OutArea to ACCEPT | OutArea **ACCEPT** | ACCEPT_Transport **Transport** |
| 4 | 4 | 4 | spDMPrepareLoad-Shipment | 1. Creates tmpTransportDist with distances for all transports 2. Creates tmpVehicleEm with emissions for all Vehicles, VehicleTypes and Operators | ACCEPT **ACCEPT** | Shipment, Transport, Emission **tmpTransport-Dist tmpVehicleEm** |
| 5 | 5 | 5 | spDMLoad-Shipment | Aggregates Shipments from ACCEPT to DM_ ACCEPT | ACCEPT **DM_ ACCEPT** | Shipment, Transport, Emission tmpTransport-Dist tmpVehicleEm F_ Shipment |
| **D=Domestic, I=International, AE=Air Express, Bold = target table or database** | | | | | | |

Stored procedures for loading of code tables

| SP Name | Description | DB | Tables |
|---|---|---|---|
| spRun | Example used to execute Swedish domestic for specific months | All | All |
| spLog | Sp that used to add a row to the xLog | **ACCEPT** | **xLog** |
| spLoadOperatorVehicle | Loads operators and vehicles from the T-Web tables | OutArea **ACCEPT** | ACCEPT_Vehicle ACCEPT_ Operator **Operator Organisation Vehicle** |
| spLoadNodeLeg | Loads Nodes and Legs from OutArea to ACCEPT | OutArea **ACCEPT** | ACCEPT_Node ACCEPT_Leg **Node Leg** |
| spLoadCustomer | Loads customers from OutArea | OutArea **ACCEPT** | ACCEPT_Custom er **Customer** |
| spLoadCityCity | Load city-to-city distances from ImpCityDistances to Leg and Nodes. ImpCityDistances is a distance tabled loaded from Rasti. | ACCEPT ACCEPT | ImpCityDistances **Node Leg** |

Imports to ACCEPT

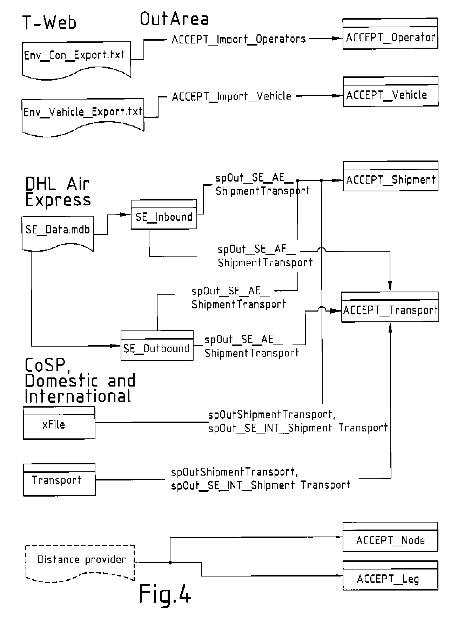

Fig. 4 describes what files and tables are imported to ACCEPT from different source systems.

How to add new source systems

Steps to add a new Source system to ACCEPT.

1. Create a stored procedure that imports Shipments and Transports to the tables ACCEPT...Shipment and ACCEPT...Transport. Se spOutShipment-Transport as an example.
2. Decide which type of distance calculation you need to perform. City-to-City or Terminal-pickup-distribution calculation.
3. To add a new product type and assign it to a distance calculation type, it is advantageous adding a Transport stored procedure to spLoadTransport.sql that handles the added product type.

How to add a new country

A first preferred embodiment of the ACCEPT-system handles data for one country e.g. Sweden. To add a new country it is useful adding a completely new instance of ACCEPT database and DM ACCEPT database it is useful to add. ACCEPT database for Sweden growth approximately 2 gigabyte per month excluding distances, emissions, oper-ators and vehicles,

| | |
|---|---|
| Handling of historical data | Historical data can be handled. It should preferably be used to just remove rows for current period and product id. |
| Automatic production | To maintenance and run the system, many jobs, scripts, and ftp-connections must be created. |
| Operational interfaces | Operational interfaces are created in advantageous implementations of the invention. |

Afterwards calculation methods for a transport emission report according to the invention are described in detail:

## Transport Emission Report – Calculation Methods

The described calculation methods and general data allow different ways of calculating environmental performance of cargo forwarded.

**General description of the calculations**

*What is calculated7*

The ACCEPT system calculates the environmental performance of each cargo shipment handled by a transport carrier, which is afterwards without limitation named DHL, in all steps in through the production systems. This means that a calculation is carried out for each relocation carried out during the transport of a shipment through the DHL transport system. The result from each relocation is then summarised in order to answer different questions, e.g.

- total emissions for a specific piece of cargo
- total emissions for all transports for a customer during a selected time period

*Definition of cargo*

Cargo data is obtained from the information systems of DHL. The data for the transported weight is used as the base for the calculations, This means that the environmental performance of each relocation is related to the weight of the investigated shipment/goods.
The weight is given as the volumetric, or dimensional, weight. This means that the physical weight of the shipment is used if the density of the shipment exceeds 250 kg/m3. Otherwise is the volumetric weight calculated as the volume of the shipment multiplied by the factor 250kg/m3.

Environmental parameters

The following parameters are evaluated:

**Table 1. Environmental performance data included in the ACCEPT system.**

| Name | Abbreviation | Unit | Description |
|---|---|---|---|
| Carbon Dioxide - Fossil | $CO_2$ fossil | [g] | Includes emissions from all non-renewable sources |
| Carbon Dioxide - total | $CO_2$ tot | [g] | Includes emissions from both renewable and non-renewable sources |
| Nitrogen Oxides | $NO_x$ | [g] | Measured as Nitrogen Dioxide, $NO_2$. |
| Hydro Carbons | HC | [g] | Includes emission data of all types of categorisations of hydrocarbon compounds (i.e. VOC, NMHC, $CH_4$) emitted from engines and power plants. |
| Particular Matter | PM | [g] | Includes emission data of all types of definitions of particles (i.e. $PM_{10}$, $PM_{2.5}$ etc.) |
| Sulphur Oxides | $SO_x$ | [g] | Measured as sulphur dioxide, SO2 |
| Primary energy - Fossil | - | [MJ] | Denotes the energy content of the utilised non-renewable energy carriers (e.g. diesel, petrol, natural gas, coal, peat etc.) |
| Primary energy - Nuclear | - | [MJ] | Denotes the total heat released by fission processes in nuclear reactors |
| Primary energy - Renewable | - | [MJ] | Denotes the energy content of the utilised renewable energy carriers (e.g. RME/bio-diesel, biogas, biomass, etc.) and/or the electricity produced by solar-, wind- and hydro power plants |

System boundaries

Time

The base for the calculation is continuously updated why the values are only valid for the 'present' system at any given time.

Geography

The emissions reported are emitted within the following geographic boundaries

ROAD -       traffic within a certain area, e.g. Europe
RAIL non-electric-   traffic within a certain area, e.g. Europe
RAIL electric -      traffic using electricity generation within a certain area, e.g. Europe (UCPTE)
SEA-         traffic within a certain area, e.g. Europe and surrounding waters
AIR -         traffic within a certain area, e.g. Europe

Technical systems

The calculation only covers emissions directly connected to the operation of the vehicle, train, vessel or aircraft. This includes engine exhaust emissions (road, rail non-electric, sea and air) and emissions from power plants engaged in the generation of consumed electricity (rail electric).

Emissions related to the following activities are implemented in more complex implementations of the invention:

    1. Construction, maintenance, service and scrapping/dismantling of:

-   vehicles and vessels
-   power plants
-   Traffic infrastructure (roads, bridges, petrol stations etc.)
-   Transport infrastructure (terminals, cargo handling systems, pallets etc.)

2. <u>Operations</u> of

- traffic infrastructure (illumination, cleaning, snow clearing, surveillance etc.)
- transport infrastructure (terminal heating and illumination, personnel, cargohandling systems etc.)

3. Extraction, production and distribution of energy carriers
4. Emissions from fuel systems and fuelling operations (evaporation)
5. Emissions related to extraordinary events (i.e. due to accidents, conflicts, natural disasters or technical malfunctions)

**ROAD Transport calculation methods**

***Truck emission calculations***

<u>Vehicle types</u>

The emission report is based on vehicle data supplied either from the vehicle operator or by application of standard default values relevant for the network of the transport carrier. The same calculation method is applied regardless of the data source. The following vehicle data is used in the calculation:

Table 2 shows default vehicle types and parameters, with typical values.

| Vehicle type | Max load capacity | Capacity utilisation | Fuel type | Fuel Consumption | Engine type |
|---|---|---|---|---|---|
| | [tonne] | [%-by weight] | | [l/vkm] | Emission Standard |
| Delivery van | 1,5 | 50 | Petrol | 0,15 | |
| Delivery van | 1,5 | 50 | Diesel | 0,15 | |
| Distribution Lorry | 8 | 50 | Diesel | 0,25 | Euro 1-3 |
| Heavy Distribution lorry | 14 | 50 | Diesel | 0,3 | Euro 1-3 |
| Heavy Distribution lorry | 14 | 50 | Methane | 0,3 | Euro 1-3 |
| Tractor + Semi-trailer | 28 | 75 | Diesel | 0,36 | Euro 1-3 |
| Lorry + Semi-trailer | 40 | 75 | Diesel | 0,45 | Euro 1-3 |

Emission data source and quality

The ACCEPT-systems calculates the environmental performance of each relocation. The system uses the most specific information available. The following priority is used:

1. The data for the specific vehicle that is used for the transport of the cargo
2. The average value for all the vehicles (of the applied type) used by the specific operator.
3. The average value for all the vehicles (of the applied type) used in the network of the transport carrier in the region
4. The default value from other external sources are applied (e.g. NTM)

Load capacity and utilisation

The emissions from the lorry are split between the cargos carried by the vehicle. The actual amount of cargo carried by each specific vehicle is usually not known. Instead, the following optional hierarchy is applied;

1. The stated average value for the specific vehicle is used

2. The average value for the specific operator is used.

3. The average value for the transport carrier network in Scandinavia/Europe is used

4. The default values from other external sources are applied (eg. NTM)

The average values calculated in 1-3 are based on data for one calendar year.

Emission levels: Fuel-, Engine- and Exhaust cleaning combinations

The calculation is based on the emission level stated for different combinations of fuel and engine type (i.e. Euro classification).

HDV emissions

**Table 3 shows exhaust gas emission data for Medium size Diesel Vehicles (MDV) in URBAN traffic**

| **MDV - Urban** traffic Vehicle gross weight 7-20 tonne, average speed 27 km/h. | | | | |
|---|---|---|---|---|
| [g/l] | HDV/ Euro0 | HDV/Eurol | HDV/Euro2 | HDV/Euro3 |
| HC | 5,83 | 3,39 | 2,04 | 1,94 |
| CO | 13,2 | 8,47 | 6,15 | 7,31 |
| $NO_x$ | 35,6 | 26,3 | 33,3 | 25,1 |
| PM | 1,82 | 1,62 | 0,576 | 0,843 |
| CO2 | 2642 | 2642 | 2642 | 2642 |
| CH4 | 0,140 | 0,0813 | 0,0491 | 0,0466 |
| SOx | 0,0133 | 0,0133 | 0,0133 | 0,0133 |

**Table 4 Exhaust gas emission data for Medium size Diesel Vehicles (MDV) in RURAL traffic**

| **MDV - Rural** traffic Vehicle gross weight 7-20 tonne, average speed 71 km/h. | | | | |
|---|---|---|---|---|
| [g/l] | HDV/ Euro0 | HDV/Euro1 | HDV/Euro2 | HDV/Euro3 |
| HC | 3,20 | 1,88 | 1,17 | 1,13 |
| CO | 9,52 | 5,46 | 4,74 | 5,53 |
| $NO_x$ | 40,7 | 28,0 | 33,1 | 24,3 |
| PM | 1,35 | 0,932 | 0,536 | 0,599 |
| CO2 | 2642 | 2642 | 2642 | 2642 |
| CH4 | 0,0768 | 0,0450 | 0,0282 | 0,0271 |
| SOx | 0,0133 | 0,0133 | 0,0133 | 0,0133 |

**Table 5 Exhaust gas emission data for Heavy Diesel Vehicles (HDV) in highway traffic**

| **HDV - Highway** traffic Vehicle gross weight >20 tonne, average speed 82 km/h. | | | | |
|---|---|---|---|---|
| [g/l] | HDV/ Euro0 | HDV/Euro1 | HDV/Euro2 | HDV/Euro3 |
| HC | 1,42 | 1,72 | 1,07 | 1,01 |
| CO | 4,81 | 4,92 | 3,57 | 4,33 |
| $NO_x$ | 35,5 | 27,2 | 31,5 | 21,8 |
| PM | 1,06 | 0,902 | 0,451 | 0,488 |
| CO2 | 2642 | 2642 | 2642 | 2642 |
| CH4 | 0,0341 | 0,0412 | 0,0258 | 0,0242 |

(continued)

| HDV - Highway traffic | | | | |
| --- | --- | --- | --- | --- |
| Vehicle gross weight >20 tonne, average speed 82 km/h. | | | | |
| [g/l] | HDV/ Euro0 | HDV/Euro1 | HDV/Euro2 | HDV/Euro3 |
| SOx | 0,0133 | 0,0133 | 0,0133 | 0,0133 |

The fuel-specific emission was found to vary somewhat with road type and vehicle type.

LDV emissions

Emission data for light duty vehicles is only presented for the urban traffic since these vehicles are mostly used for distribution in urban areas.

Table 6. Exhaust gas emission data for Diesel Light Duty Vehicles (LDV) in URBAN traffic.

| LDV - Urban | | | | | | |
| --- | --- | --- | --- | --- | --- | --- |
| traffic N1-III Vehicle gross weight max 3,5 tonne, average speed 35 km/h. | | | | | | |
| [g/l] | vor 86 | XXIII/EEA1 | EURO1 | EURO2 | EURO3 | EURO4 |
| HC | 6,12 | 1,514 | 1,514 | 1,270 | 0,701 | 0,597 |
| CO | 15,5 | 7,00 | 7,00 | 3,50 | 1,93 | 1,66 |
| $NO_x$ | 9,7 | 9,27 | 9,27 | B,0 | 6,04 | 3,40 |
| PM | 4,08 | 1,003 | 1,003 | 0,866 | 0,387 | 0,196 |
| $CO_2$ | 2642 | 2642 | 2642 | 2642 | 2642 | 2642 |
| $CH_4$ | 0,147 | 0,0363 | 0,0363 | 0,0305 | 0,0168 | 0,0143 |
| SOx | 0,0133 | 0,0133 | 0,0133 | 0,0133 | 0,0133 | 0,0133 |
| FC [l/km] | 0,115 | 0,101 | 0,101 | 0,101 | 0,101 | 0,101 |

Emission data sources

The applied diesel engine emission levels are adopted from the material presented by a competent source.

Emission control devices

The following emission control devices are applied with stated reduction of emissions

Table 7 shows diesel engine emission reductions with abatement techniques.

| Engine generation | Substance | Ox.kat. | PM-filter (CRT) | EGR (retrofit) | EGR + PM filter (retrofit) | SCR | SCR+PM filter |
| --- | --- | --- | --- | --- | --- | --- | --- |
| Euro I | CO2 | | | 2% | +2 % | | |
| | HC | -90% | -90% | | -90% | | -90% |
| | NOx | | | -40% | -40% | - 81% | -81% |
| | PM | -20% | -90% | | -90% | | -90% |
| Euro II | CO2 | | | 2% | +2% | | |
| | HC | | -90% | | -90% | | -90% |
| | NOx | | | -40% | -40% | | -81% |
| | PM | -15 % | -90% | | -90% | | -90% |

(continued)

| Engine generation | Substance | Ox.kat. | PM-filter (CRT) | EGR (retrofit) | EGR + PM filter (retrofit) | SCR | SCR+PM filter |
|---|---|---|---|---|---|---|---|
| Euro III | CO2 | | | +2% | 2% | | |
| | HC | -90% | -90% | ** | - 90%** | | -90% |
| | NOx | | | -40% | -40% | -81% | -81% |
| | PM | -10 % | -90% | | -90% | | -90% |
| Euro IV | CO2 | | | | | | |
| | HC | | -90% | | | | -90% |
| | NOx | | | | | -81% | -81% |
| | PM | | -90% | | | | -90% |
| Euro V * | CO2 | | | | | | |
| | HC | | -90% | | | | -90% |
| | NOx | | | | | - 81% | -81% |
| | PM | | -90% | | | | -90% |

Definition of vehicle capacity and capacity utilisation

Cargo capacity is defined as the physical weight carrying capacity of respective vehicle. The calculation of the cargo capacity utilisation uses data for the volumetric weight of the investigated cargo shipment. The capacity utilisation is defined as the loaded volumetric weight divided by the maximum allowed carrying capacity.

$$CCU = \frac{\sum_i w_{i-vol}}{W_{max}}$$

Where:

CCU = cargo capacity utilisation
$w_{i-vol}$ = volumetric weight of shipment i
$w_{max}$ = Max allowed cargo weight
i = index number for all shipments loaded on the vehicle.

Allocation of emissions to transported cargo

Full truck load

The environmental performance data for the vehicle is divided among the cargo shipments in proportion to their volumetric weight, using the following formula;

$$\text{Share to shipment (i)} = \frac{w_{i-vol}}{\sum_i w_{i-vol}} = \frac{w_{i-vol}}{CCU \times W_{max}}$$

<u>Integrated cargo transports via terminals</u>

Inter terminal transports

The transports between the terminals are handled in the same way as the full truckload.

Distribution and Pick up

The environmental performance of the transport between the terminal and the customer (both pick up and delivery) is calculated as follows:

A number of integration terminals are selected in order to represent different daily flow volumes, geographic coverage of operations, types of distribution vehicles etc. The total environmental performance for all delivery and pick-up traffic to and from each terminal is calculated. This amount is divided by the total amount of cargo handled in the terminal over the same period. The result is an average environmental performance per tonne cargo passing through the terminal. The rest of the terminals are categorised according to one of the investigated terminal types.

When information about the distance between the terminal and the origin/delivery address of a specific shipment is available the system will recognize it and use the specific characteristics of each truck. The environmental performance for the pick-up/distribution of a shipment is only depending upon the (volumetric) weight of the shipment.

*Green Tonne*

'Green tonne'-trucks are only considered for the calculation of the environmental performance for the goods sent by customers buying this service. The environmental performance of these trucks, and the load carried by them, is therefore excluded in the calculation of the terminal average value.

RAIL Transport calculation methods

The ACCEPT system handles transports with cargo train in one ore more countries, as for example Sweden. In one advantageous implementation, only trains pulled by electrical engines are considered,

Cargo units

Data for rail transport is given for the transport of the following cargo units:

- 20 feet container

- 40 feet container

- semi-trailer (for road transport)

The emission calculations for trains are based on the weight of the cargo. The following default values are used for these units:

**Table 8. Investigated cargo units for train transport.**

|  | Cargo unit | 20 feet container | 40 feet container | Semi-trailer |
|---|---|---|---|---|
| Max cargo carrying capacity of unit | [tonne] | 28,25 | 28,8 | 26 |
| Cargo capacity utilisation of unit | [%-weight] | 50% | 50% | 75% |
| Cargo weight in unit | [tonne] | 14 | 14 | 20 |
| Cargo unit tara | [tonne] | 2,23 | 3,7 | 7 |

(continued)

| *Train- and waggon types* | | | | |
|---|---|---|---|---|
| The cargo types are transported on different wagon types, for example the following Swedish waggon types: | | | | |
| | Cargo unit | 20 feet container | 40 feet container | Semi-trailer |
| Waggon type | | Container waggon (Lgjs 741) | Container waggon (Lgjs 741) | Semi-trailer waggon (Ldgs) |

Emission calculation

The emissions reported for the electrical train are those emitted from the power plants balancing the electricity use. The electricity need for pulling a typical cargo train is combined with the emission profile for the selected mix of power plants, this in order to find the emissions related to the transport. These emissions are then divided between the transported cargos in proportion to the net physical weight.

Electricity demand

The electricity demand for pulling a typical cargo train is calculated by using the method suggested by the EcoTransIT project (also adopted by NTM), see EcoTransIT 2003. The calculation is made for a block train of 1000 tonnes gross. This weight is entered into the formula presented in Table 9 below.

| Table 9. Electricity consumption for cargo trains. | | | |
|---|---|---|---|
| Traction | Topography | Gross weight range ($W_{gr}$) [tonne] | Electricity consumption (EC) [Wh/gross tkm] |
| Electrical | Hilly terrain | 500-1500 | $EC=675*W_{gr}^{-0,5}$ |

The electricity demand is thus fond to be 0,021 [$kWh_{el}$/tonbrxkm], as measured at the engine.

Transmission losses

There are losses in the transmission of the electricity from the power plant to the engine. The losses are moderate for the high voltage transmission to the connection to the rail network. The losses between the outtake from the grid to the engine are higher, due to frequency modulation and lower transmission voltage in the catenary. The following values used by NTM are applied in the calculation:

| Electricity demand at engine | [$kWh_{el}$/ton-br$\times$km] | 0,021 |
|---|---|---|
| Transmission losses between engine - power grid | [%] | 20% |
| Transmission losses between power grid - power plant | [%] | 4% |
| Electricity demand at power plant | [$kWh_{al}$/ton-br*km] | *0,028* |

Electricity needed per unit

Next step in the calculation is to find the gross weight of the waggons carrying the 3 different loaded cargo units. The following Tara weights and cargo capacity data are used in the calculations:

**Table 10. Cargo and waggon data used in train calculations**

| | Cargo unit | 20 feet container | 40 feet container | Semi-trailer |
|---|---|---|---|---|
| Waggon type | | Container waggon (Lgjs 741) | Container waggon (Lgjs 741) | Semi-trailer waggon (Ldgs) |
| Waggon tara [tonne] | | 11,8 | 11,8 | 13,35 |
| Cargo units per waggon | | 2 | 1 | 1 |
| Train [ton-weight per gross] cargo unit | | 22,3 | 29,9 | 39,9 |

Tonne is a mass unit. It equals 1000 kg.

The waggon gross weight is connected to the carried unit(s). These data are then connected to the calculated emission per gross ton in order to find the environmental data connected to the transport of one unit 1 kilometre.

Electricity production

A mix of the electricity production in the Nordic countries (Norway, Denmark, Sweden and Finland) was used in the calculation. The production volumes from each country were combined with the emission data for Swedish electricity generation. The following mix was applied:

**Table 11. Applied mix of power plants.**

| power plant | Nordic mix 1998 |
|---|---|
| Hydro power | 54,2% |
| Nuclear power | 24,2% |
| Wind power | 0,8% |
| Coal condensing power | 7,1% |
| Oil condensing power | 1,3% |
| CHP - Coal | 2,8% |
| CHP - oil | 1,2% |
| CHP - Natural gas | 3,7% |
| CHP - Biomass (steam cycle) | 4,7% |
| CHP - peat | 0,0% |
| Gas turbine | 0,0% |
| Natural Gas - Combined cycle | 0,0% |
| CHP = Combined Heat Power generation | |

This kind of values (also e.g. table 14) is an example and will vary with time and between countries and need to be updated
The emission profile for this production mix as presented below was applied in the calculations.

**Table 12. Environmental profile of selected mix of power plants.**

| | | Emissions / Primary energy |
|---|---|---|
| Substance | unit | Only from power plant |
| $CO_2$ fossil | [g/kwh $_{el}$] | 130 |
| $CO_2$ total | [g/kWh $_{el}$] | 115 |
| $NO_x$ | [g/kWh $_{el}$] | 0,26 |
| HC | [g/kWh $_{el}$] | 0,002 |
| PM | [g/kWh $_{el}$] | 0, 014 |
| $SO_2$ | [g/kWh $_{el}$] | 0,28 |
| Primary energy - Fossil | [MJ/kWh $_{el}$] | 2,2 |
| Primary energy - Nuclear | [MJ/kWh $_{el}$] | 1,4 |
| Primary energy - Renewable | [MJ/kWh $_{el}$] | 2, 91 |

Calculation results

The following calculation result is used in the ACCEPT application.

**Table 13. Environmental performance data for the transport of 1 unit 1 kilometre.**

| 20 feet container | | Container block train LCI data for electricity generation | Container block train only emissions from power plant |
|---|---|---|---|
| $CO_2$ fossil | [g/km] | 82 | 81 |
| $CO_2$ tot | [g/km] | 73 | 71 |
| $NO_x$ | [g/km] | 0,2 | 0,2 |
| HC | [g/km] | 0,006 | 0,001 |
| PM | [g/km] | 0,011 | 0,009 |
| $SO_2$ | [g/km] | 0,2 | 0,17 |
| Primary energy Fossil | [MJ/km] | 1,37 | 1,37 |
| Primary energy - Nuclear | [MJ/km] | 1 | 0,9 |
| Primary energy - Renewable | [MJ/km] | 2 | 1,80 |
| **40 feet container** | | Container block train LCI data for electricity generation | Container block train Only emissions from power plant |
| $CO_2$ fossil | [g/km] | 111 | 108 |
| $CO_2$ tot | [g/km] | 98 | 95 |
| $NO_x$ | [g/km] | 0,2 | 0,22 |
| HC | [g/km] | 0,008 | 0,001 |
| FM | [g/km] | 0,01 | 0,01 |
| $SO_2$ | [g/km] | 0,2 | 0,2 |
| Primary energy - Fossil | [MJ/km] | 1,8 | 1,8 |
| Primary energy - Nuclear | [MJ/km] | 1 | 1 |
| Primary energy - Renewable | [MJ/km] | 2 | 2 |
| **Semi-trailer** | | Semi-trailer waggons LCI data for electricity generation | Semi-trailer waggons Only emissions from power plant |
| Data per trailer | | | |
| $CO_2$ fossil | [g/km] | 148 | 144 |
| $CO_2$ tot | [g/km] | 130 | 127 |
| $NO_x$ | [g/km] | 0,3 | 0,3 |
| HC | [g/km] | 0,011 | 0,002 |
| PM | [g/km] | 0,02 | 0,02 |
| $SO_2$ | [g/km] | 0,32 | 0,31 |
| Primary energy Fossil | [MJ/km] | 2,5 | 2,5 |
| Primary energy - Nuclear | [MJ/km] | 1,6 | 1.6 |
| Primary energy - Renewable | [MJ/km] | 3 | 3 |

**SEA Transport calculation methods**

**_Ship and Cargo types_**

The following cargo types are applied in the calculation for sea transport: 20 feet container, 40 feet container, semi-trailer, articulated truck, rigid truck and trailer.

The ACCEPT systems calculates the environmental performance of cargo transported by ships by applying data for a number of representative vessels. The selected vessel types are presented in Table 13 below. Environmental data for two container sizes and 3 different road vehicles are calculated, see Table 13 for the selected combinations of cargo and vessel type.

**Table 13. Cargo units and ship types included in the ACCEPT model.**

| Vessel type | RoPax | RoPax | RoRo | RoRo | RoRo | Container feeder | Large container vessel (ocean g |
|---|---|---|---|---|---|---|---|
| Vessel name/ description | Mecklenburg Vorpommern | MS Deutschland | Older, slow (<18 kn.) - no abatement | newer, faster (>20 kn.) - no abatement | newer, faster (>20 kn.) - SCR de-NOx | Older, slow (<18 kn.) - no abatement | 6 600 TEU - no a ment |
| Route | Trelleborg (SE) - Rostock (DE) | Rödby (DK) Puttgarden (DE) | Short Sea | Short Sea | Short Sea | Short Sea | Short Sea |
| 20 feet container | | | | | | ☐ | ☐ |
| 40 feet container | | | | | | ☐ | ☐ |
| Semi-trailer | ☐ | ☐ | ☐ | ☐ | ☐ | | |
| Articulatedtruck | ☐ | ☐ | ☐ | ☐ | ☐ | | |
| Rigid truck and traller | ☐ | ☐ | ☐ | ☐ | ☐ | | |
| Emission calculations - general methodology | | | | | | | |

The emissions for the selected ships are calculated in the following steps:

1. The fuel consumption per km for the vessel is adopted from published vessel information or calculated based on the engine type and size.
2. An average emission profile for the most common engine types (for each vessel type) is selected
3. The emission per km is found by combining the two abovementioned steps.
4. The total emission is allocated to one cargo unit by dividing the emission by the average number of cargo units carried.

The allocation procedure in step 4 differs between the vessel types, see below.

**A calculation example**

The calculation is illustrated by the example of an older and slow RoRo vessel (Older Danish vessel, DANA CIMBRIA).

**Step 1. Fuel consumption (FC).**

The fuel consumption is not stated in the vessel information. The consumption is calculated by assuming a specific fuel consumption of 200 g/kwh and a 85% power outtake at cruise speed, i.e. 17,5 knots. With an installed engine power of 6600 kw is the fuel consumption given as;

$$FC = 0,85 \times 6600 \times 0,200 = 1122 \quad [kg/h]$$

with a speed of 17,5 knots = 32,4 km/h,

$$FC = \frac{1122}{32,4} = 34,6 \quad [kg/km]$$

**Step 2 & 3. Vessel Emissions**

The emission profiles are selected based on the combination of fuel type and engine speed. From the reference Whall et al. (2002) were the following emission data extracted for the use in the calculations for the ACCCEPT system:

**Table 14. Emissions from Main Engines at cruise speed.**

| | Engine type | Slow Speed Diesel engine (SSD) | Medium Speed Diesel engine (MSD) | Medium Speed Diesel engine (MSD) |
| --- | --- | --- | --- | --- |
| | Fuel type | Residual oil | Marine Gas Oil | Residual Oil |
| $CO_2$ fossil | [kg/tonne] | 3179 | 3177 | 3178 |
| $CO_2$ total | [kg/tonne] | 3179 | 3177 | 3178 |
| $NO_x$ | [kg/tonne] | 93 | 65 | 66 |
| HC | [kg/tonne] | 3 | 2 | 2 |
| PM | [kg/tonne] | 4 | 1 | 3,8 |
| $SO_x$ | [kg/tonne] | 54 | 10 | 54 |
| Primary energy - Fossil | [MJ/tonne] | 41000 | 42600 | 41000 |
| Primary energy - Nuclear | [MJ/tonne] | 0 | 0 | 0 |

(continued)

| | Engine type | Slow Speed Diesel engine (SSD) | Medium Speed Diesel engine (MSD) | Medium Speed Diesel engine (MSD) |
| | | Residual oil | Marine Gas Oil | Residual Oil |
| --- | --- | --- | --- | --- |
| | Fuel type | | | |
| Primary energy - Renewable | [MJ/tonne] | 0 | 0 | 0 |
| Reference | | Whall et al. (2002) | Whall et al. (2002) | Whall et al. (2002) |

The RoRo vessel is typically powered by a medium speed diesel engine (MSD) burning residual oil. The emission per km is calculated by multiplying the fuel consumption by the emissions stated in Table 14, yielding the results presented below:

**Table 15. Calculated emission for the selected RoRo ship.**

| Fuel consumption | [ton/km] | 0,0346 |
| --- | --- | --- |
| $CO_2$ fossil | [g/km] | 110 033 |
| $CO_2$ total | [g/km] | 110 033 |
| $NO_x$ | [g/km] | 2275 |
| HC | [g/km] | 81 |
| PM | [g/km] | 130 |
| $SO_2$ | [g/km] | 1869 |
| Primary energy - Fossil | [MJ/km] | 1419 |
| Primary energy - Nuclear | [MJ/km] | 0 |
| Primary energy - Renewable | [MJ/km] | 0 |

**Step 4. Allocation to transported cargo**

The total cargo capacity of the selected RoRo vessel was stated as 2 000 lane meters. The utilisation of the vessel is difficult to assess since this type of information (often) is considered as business sensitive information. A frequently stated CCU (1m) of 90% is used in these calculations. This value could be a bit on a high end and should probably be changed to 75-80% in a future up-date. The share of the ship emission to allocate to one lane metre is then calculated as 0,056%, see below.

| Lane meter capacity [1m] | 2000 |
| --- | --- |
| Cargo Capacity Utilisation | 90% |
| Utilised lane meter [1m] | 1800 |
| Share to one lane meter | 0,056% |

The following proportions then calculate the emission to each cargo unit:

**Table 16. Share of ships emission to each cargo unit, calculation example for RoRo vessel.**

| Cargo unit | Vehicle length [lm] | Share of ships emission |
| --- | --- | --- |
| Semi-trailer | 13,6 | 0,76% |
| Articulated truck | 18 | 1,00% |
| Rigid truck and trailer | 25,25 | 1,40% |

The emission per cargo unit is then found by the combination of the ship emission and the share stated above. The result is presented in Table 17 below:

**Table 17. Calculated emissions per cargo unit, calculation example for RoRo vessel.**

| Substance | unit | Semi-trailer | Articulated truck | Rigid truck and trailer |
|---|---|---|---|---|
| $CO_2$ fossil | [g/km] | 831 | 1 100 | 1 544 |
| $CO_2$ tot | [g/km] | 831 | 1 100 | 1 544 |
| $NO_x$ | [g/km] | 17 | 23 | 32 |
| HC | [g/km] | 0,6 | 0,8 | 1,1 |
| PM | [g/km] | 1,0 | 1,3 | 1,8 |
| $SO_2$ | [g/km] | 14 | 19 | 26 |
| Primary energy - Fossil | [MJ/km] | 11 | 14 | 20 |
| Primary energy - Nuclear | [MJ/km] | 0 | 0 | 0 |
| Primary energy - Renewable | [MJ/km] | 0 | 0 | 0 |

vessel type specific comments

RoRo vessels

The following vessels are used in the calculations for transports with RoRo ships:

**Table 18. Selected RoRo vessels.**

| Vessel | | DANA CIMBRIA Older, | DFDS Tor Selandia newer, | DFDS Tor Selandia newer, |
|---|---|---|---|---|
| Description | | slow | faster | faster |
| Speed | [knop] | 17,5 | 21 | 21 |
| Engine type | | MSD | MSD | MSD |
| Fuel type | | RO | RO | MGO |
| Sulphur content | [%-weight] | 2,7 | 2,7 | 0,5 |
| Abatement | | - | - | SCR |
| Lane meter capacity | [lm] | 2000 | 3000 | 3000 |
| Capacity utilisation | | 90% | 90% | 90% |
| Utilised lane meter | [lm] | 1800 | 2700 | 2700 |

RoPax vessels

A RoPax vessel is carrying both passengers and vehicles. The RoPax ships usually offer substantial volumes for passenger purposes. The fact that they are carrying such different types of cargo makes the allocation calculation different calculation modules. One of the less complex ones, allocation by deck type, is selected for the calculations of data applied in the ACCEPT system. This method divides the ships emission in the following way:

1. (the number of decks carrying vehicles) / (total number of 'cargo' decks)
2. the share allocated to the vehicle decks are then divided by the number of utilised lane metres. (same as for the RoRo ships).

Like for the RoRo ships, high quality utilisation data is difficult to obtain from the ship operators.
The following vessels are used in the calculations for the ACCEPT system:

**Table 19. Selected RoPax vessels.**

| Vessel description | | | |
|---|---|---|---|
| vessel | | **Mecklenburg Vorpommern** | **MS Deutchland** |
| Route | | Trelleborg (SE) - Rostock (DE) | Rödby (DK) - Puttgarden (DE) |
| Engine type | | MSD | MSD |
| FC/crossing | [ton] | 15,7 | 1,82 |
| Distance | [km] | 202 | 26 |

(continued)

| Vessel description | | | |
|---|---|---|---|
| Fuel type | [%-weight] | RO | RO |
| Sulphur content | [%-weight] | 2,7 | 2,7 |

The emissions used in the ACCEPT model are rather high since the selected ships are rather small and old. Newer ships are usually less polluting due to larger lane metre capacity as well as cleaner engines. Vessels exist with half the $CO_2$ emission and only a fraction of the $NO_x$ emission (e.g. due to SCR de-$NO_x$ systems).

The ACCEPT system should be up-dated with more situation specific data supplied from the ship operators carrying out the transports of the investigated vehicles. Capacity utilisation and fuel consumption data should be averaged over a longer period of operations (e.g. one year).

Container vessels

Cargo units

Data for transport with container vessel is given for the transport of the following cargo units:

- 20 feet container

- 40 feet container

The following two vessel types are included in the ACCEPT system, see

**Table 20. Container ship types**

| Vessel type | | Small feeder vessel | Ocean going |
|---|---|---|---|
| Category | | *Container Older, more* | Container |
| Description | | *slow* | Mid sized |
| Speed [knots] | | 13,7 | 20,2 |
| Engine type | | MSD | SSD |
| Fuel type | | RO | RO |
| Sulphur content | [%-weight] | 2,7 | 2,7 |
| Abatement | | - | - |

The vessel emission values were calculated in the same way as for RoRo vessels. Fuel consumption was given for a specified/normal route.

The calculated emissions were allocated to the number of utilised TEU positions. The following values were obtained:

**Table 21. Allocation data for container ships.**

| | Small feeder vessel | Ocean going |
|---|---|---|
| TEU capacity [TEU] | 800 | 6600 |
| CCU - Cargo Capacity Utilisation | 80% | 100% |
| TEU positions [TEU] | 640 | 6600 |
| Share to one TEU position | 0,156% | 0,015% |

The environmental data per cargo unit can now be calculated. The following results were obtained:

| Vessel Description | | Small feeder vessel Older, more slow | | Ocean going Mid sized | |
|---|---|---|---|---|---|
| Speed | [knots] | 14 | | 20 | |
| Capacity | [TEU] | 800 | | 6600 | |
| Abatement | | - | | - | |

(continued)

| Vessel Description | | Small feeder vessel Older, more slow | | Ocean going Mid sized | |
|---|---|---|---|---|---|
| Substance | unit | 20 feet container | 40 feet container | 20 feet container | 40 feet container |
| $CO_2$ fossil | [g/km] | 122 | 244 | 64 | 129 |
| $CO_2$ tot | [g/km] | 122 | 244 | 64 | 129 |
| $NO_x$ | [g/km] | 2,5 | 5,1 | 1,9 | 3,8 |
| HC | [g/km] | 0,090 | 0,180 | 0,062 | 0,125 |
| PM | [g/km] | 0,14 | 0,29 | 0,08 | 0,17 |
| $SO_2$ | [g/km] | 2,1 | 4,2 | 1,1 | 2,2 |
| Primary energy - Fossil | [Mi/km] | 1,6 | 3,2 | 0,8 | 1,7 |
| Primary energy - Nuclear | [MJ/km] | 0 | 0 | 0 | 0 |
| Primary energy - Renewable | [MJ/km] | 0 | 0 | 0 | 0 |

**Summary of the results**

| 20 feet container | | 20 feet container | | | | | | | | |
|---|---|---|---|---|---|---|---|---|---|---|
| | | RoPax | RoPax | RoRo | RoRo | RoRo | Small feeder vessel | Ocean going | Intermodal train - LCI | Intermodal train with out LCI |
| | | Mecklenburg Vorpommern | MS Deutschland | Older, slow (<18 kn.) - no abatement | newer , faster (>20 kn.) no abatement | new er, faster (>2 0 kn.) - SCR de-NOx | Older, slow (<18 kn.) - no abatement | 6 600 TEU - no abatement | 1 000 tonnes | 1 000 tonnes |
| CO2 fossil | [g/km] | - | - | - | - | - | 122 | 64 | 82 | 81 |
| CO2 tot | [g/km], | - | - | - | - | - | 122 | 64 | 73 | 71 |
| Nox | [g/km] | - | - | - | - | - | 2,5 | 1,9 | 0,2 | 0,2 |
| | | | | | | | 0,090 | 0,06 | 0,00 | 0,00 |
| HC | [g/km] | - | - | - | - | - | | 2 | 6 | 1 |
| | | | | | | | 0,144 | 0,08 | 0,01 | 0,00 |
| PM | [g/km] | - | - | - | - | - | | 3 | 1 | 9 |
| S02 | [g/km] | - | - | - | - | - | 2,1 | 1,1 | 0,2 | 0,17 |
| Primary energy - Fossil | [MJ/km] | 1,6 | 0,63 | 1,37 | 1,37 | - | | | | |
| | | - | - | - | - | - | | | | |
| Primary energy - Nuclear | [MJ/km] | 0 | 0 | 1 | 0,9 | - | | | | |
| | | - | - | - | - | - | | | | |
| Primary energy - Renewable | [MJ/km] | 0 | 0 | 2 | 1,80 | - | | | | |
| | | - | - | - | - | - | | | | |

Afterwards standard operating procedures (SOP) for carrying out advantageous implementation of the invention are described in further detail.

The calculation processes are carried out with different data modules.

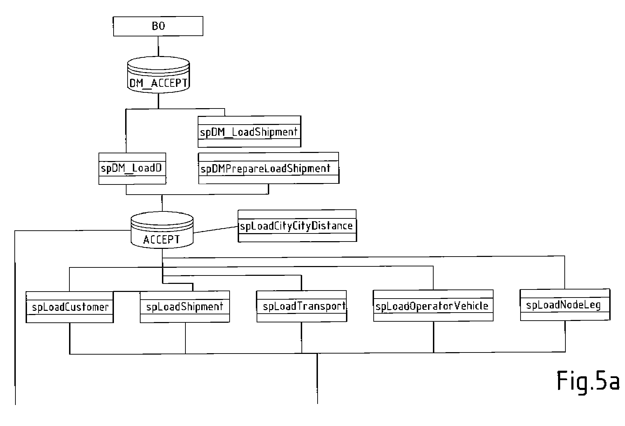

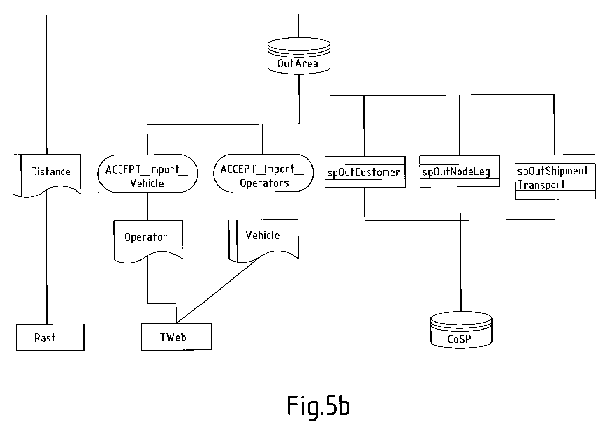

A preferred embodiment is depicted in Fig. 5.

The following sequences of activities are to be preferred; dependencies are shown for each step.

- **BACKUP OF WORLDMAIL.**
- **WEEKLY BILLING.**
- **BEFORE REPORTS**. (SLIB REPORTS - BEFORE)
- **GBB EXT/LISTNING.**(MENU IMB315)
- **CHANGE PARAMETERFILE.** (MENU IBM520)
- **SAVE ALL IBS files.** (MANUAL TAR BACKUP)
- **DAILY SAVE & REGULAR SHIPMENTS.**(MENU IBM305)
- **ALLOCATE HANDLING FEE'S AND DISCOUNT'S**. (MENU IBM330)
- **REGULAR INVOICE PROCESSING**. (MENU IBM330)
- If A.IB.CPH exists it should be renamed.
- **CREATE STATISTIC SUMMARY FILE.** (MENU IBM335)
- **VARIOUS REPORTS**. (MENU IBM335)
- **COPY OF A.IB.T99.**
- **SET PERIOD END DATE.** (MENU IBM340)
- **CHANGE PARAMETERFILE**. (MENU IBM520)
- **VARIOUS REPORTS**. (SLIB REPORTS - AFTER)
- **E-MAIL TO ANNIE.**
- **Capella tapes.**
- **Slet filer.**
- **MONTH END FILE HOUSEKEEPING**. (MENU IBM340)
- **MONTHEND FOR INBOUND.**
- **COPY OF A.IB.T98**
- **ISS MONTH-END.**
- **RMS FILE TRANSFER.**
- **T99 EXTRACT.**

The scope is to give easy and to potentially secure access to external users (Customer and Suppliers) and internal users (Sales representatives, Quality assurance, Analysts and maintenance of the system).

The access should be done from a company web site, external and internal, and should be built in such a way that it easily can be expanded to countries/regions outside of Nordics.

Given the confidentiality of the information in ACCEPT, security is a vital part of the solution.

External Access

Within the user rights for a customer, there could be the possibility to give limited access rights to other individuals within the company, e.g. give access rights for individual XX only for customer number 99999 and 88888.

Internal Access

Within the user rights for an employee, there should be the possibility to give limited access rights to other individuals within the company, e.g. give access rights for individual XX only for customer number 99999 and 88888.

This can also be used for defining who has the right to maintain the basic tables controlling the application.

External Access to ACCEPT

**Generic description**

When the customer wants to log in and view his emission data, the following steps can be defined:

**1.** Enter the official company web site

**2.** Select the link "Emission Report"

**3.** Enter user id and password, to verify access rights

**4.** Display ACCEPT select page, Register selection criteria

**5.** Send request to ACCEPT

**6.** Get reply on how information will be distributed

**1. Enter the official company web site**

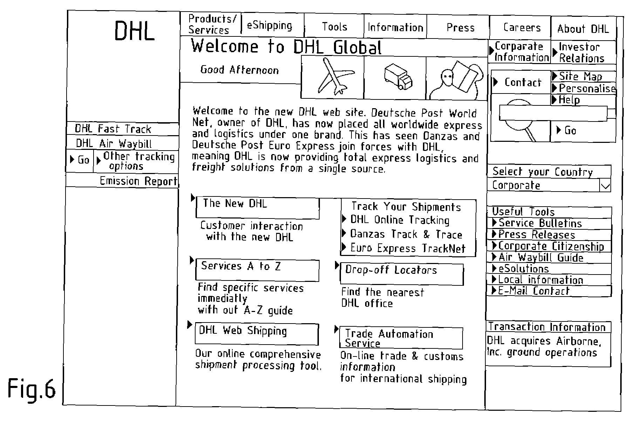

Entering the company web site is done using standard browser via open Internet.
Security
No security issues, no check
A screenshot of a desktop of a computer carrying out a program according to this implementation of the invention is depicted in Fig. 6.

**2. Select the link "Emission Report"**

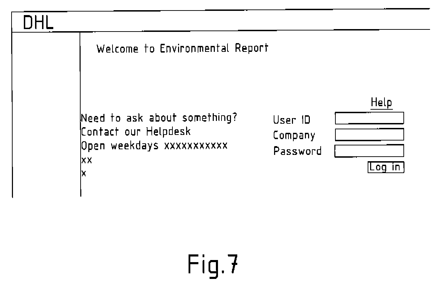

The user clicks on the link and the system shows start page for "Emission Report"
Security
No security issues, no check
A Screenshot of a graphical user interface (GUI) of a computer program according to the invention is depicted in Fig. 7.

**3. Enter user id and password, to verify access rights**

Entering user id and password makes the system check whether the user has access rights to Emission Report, and also defines what access rights he has.

- User ID is verified, or denied
- What Customer IDs are available for this id
- What reports are available for this id
- Which means of output are available for this id
- Has this ID administrator rights

Security

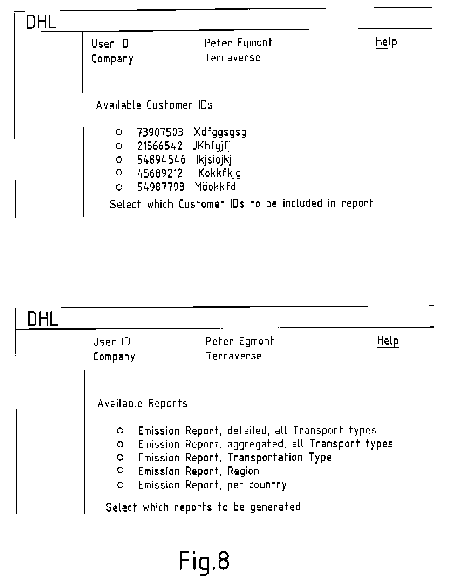

- User ID is verified towards password, (other controls possible?)
- User rights are set according to defined parameters
- A screenshot of a desktop of a computer carrying out a program according to this implementation of the invention is depicted in Fig. 8.

**4. Display ACCEPT select page**

In the ACCEPT select page choices can be made according to predefined parameters.

- A list of Customer IDs available for this id is shown. Selection can be made between local and global IDs.
  *The user marks the wanted customer IDs.*
- A list of reports available for this id is shown.
  *The user marks the wanted reports.*
- On each selected list, the columns and aggregation levels can be set (optional, phase 2-3)
  *The user selects the wanted columns and/or aggregation levels.*
- A list available means of output available for this id is shown, e.g. Excel, Word or other.
  *The user selects the wanted output format.*
- A list of sending the output to Customer is shown, e.g.

  - Send report via e-mail
  - Send report by mail

- Send report via DHL sales representative
- ....

*The user selects the wanted distribution format.*

Security
- User rights are set according to defined parameters
- Consistency check is done, e.g. periods

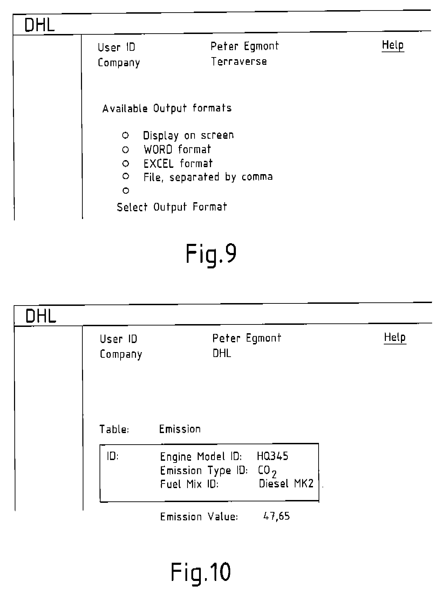

A screenshot of a desktop of a computer carrying out a program according to this implementation of the invention is depicted in Fig. 9.

**5. Send request to ACCEPT**

Customer sends request to ACCEPT by pressing ENTER.

Security

- User rights are set according to defined parameters
- Consistency check is done, e.g. periods

**6. Get reply on how information will be distributed**

The system confirms the request is received and how it will be delivered.
If method of delivery is on-line report, report is displayed and appropriate application Excel, Word or similar is started

Security
No security issues, no check

Internal Access to ACCEPT

**Generic description**

The following paragraphes give an overview of how raw data, which is needed to calculate environmental data, should be collected as a shipment is transported.
When the employee of the transport carrier wants to log in and view his emission data, it is done in line with the external access to ACCEPT.
The major difference is that some internal users have access to the base tables that control the calculation of emissions, e.g. the table for Emission Values.
A screenshot of a desktop showing this status of a computer program according to the invention is depicted in Fig. 10.
In a preferred embodiment of the invention the processing of physically present mailpieces takes place in a processing station. In this embodiment, address components 1 that are present on the mailpieces are transmitted to an internal data stock. The internal data stock supplies a result address 2 on the basis of the transmitted address components.
Moreover, it is checked whether environmental data were detected. In this case, a selection is made from among the determined environmental data.
Further preferred process steps for the execution of the invention will be explained below. The process steps can be used individually as well as combined with each other, as a result of which the efficiency of the individual process steps is further increased to an especially surprising extent.
A process component that translates into increasing the efficiency of the method with relatively little effort is the implementation of specialized reading software.
A conversion file, which is incorporated into the so-called dictionary of the sorting installation, can implement environmental data. In this manner, if the reading quality is sufficient, then the environmental data are ascertained reliably enough so that the sorting machine is able to sort the physical objects on the basis of the input distribution information (street, optionally house number) and the environmental data.
The environmental data can be applied in different ways, for example, by means of various printing processes. Printing with a fluorescent dye is especially advantageous since this make it possible to especially easily and reliably carry out an optical detection of the target code during a subsequent sorting procedure.
The target code can assume various forms, for example, it can contain environmental data, especially environmental requirement data and other data as for example the complete address information, which is preferably achieved by using an 11-character to 13-character target code with an additional imprint of the postal code in plain text.

However, it is possible to use another code instead of this code, for example, instead of the fluorescent barcode, to use a label with a 4-state code that likewise contains the requisite target information that is in encrypted form and that is applied onto the mailpiece automatically, preferably in the form of a label. Preferably, the postal code is additionally written on the label in plain text.

In addition to the automated use of the method in processing machines, which are preferably integrated into the normal processing of the physical objects, individual physical objects can also be detected separately, for example, at special processing stations.

Preferably, the individual stations consist of a PC with a monitor and keyboard as well as a label printer as an additional output unit that is controlled by the program and that generates a plain text label or, as an alternative, a 4-state label.

The implementation of the process steps will be explained below with reference to the example of a two-part computer system. However, the invention is not restricted to the especially advantageous case of a two-part computer system presented here.

As a matter of principle, any computer is suitable for carrying out the invention.

The term "computer" is by no means to be understood in a limiting manner. This can be any unit that is suitable for performing computations, for example, a workstation, a personal computer, a microcomputer or circuitry suitable for performing computations and/or comparisons.

Within a preferred embodiment a database is used on a server that takes over the described functions for several processing stations.

The client part is realized in a platform-independent programming language. The use of another programming language is fundamentally possible. The recognizable parts of the data are entered via an input mask. Then a database query is sent by the client to the server.

The server is a powerful computer with several processors and a large main memory. This is necessary in order to achieve very rapid access times.

The data stock consists of the files from a suitable database application containing, at least some environmental data. The design of the database is also configured for rapid access. However, this also means that a great deal of data has to be stored redundantly.

The data accesses are provided by a suitable database application, for example, PL/SQL. Via a PL/SQL procedure, the client receives his result set from the server in the form of data records. The result set is sorted at the client and displayed in a selection list. It can be locally limited by additional entries.

A special feature of the program is that, in a separate list, all environmental data are automatically displayed with the appertaining data for the delivery (post office box, postal code).

A decision module or an operator decides which of the displayed data records (from the normal or, for example, from the special selection list) are applicable in each given case. The decision module or the operator selects this data record and actuates the printing button. Via the locally connected label printer, the appropriate label is printed with the correct address and glued onto the mailpiece. A decision module is a program module that can observe its environment and that can act largely autonomously. For this purpose, the decision module contains information about the parameters and action instructions that have to be taken into account regarding the procedures. Preferably, the decision module is capable of acting as autonomously as possible.

In a preferred embodiment environmental requirement information attached to the physical object is detected and transmitted to an interface computer. The interface computer contains memory locations for associating the detected images.

The interface computer is connected to a server. The server preferably has the previously presented structure and allows a matching of environmental requirement data with archive able environmental impact data.

The environmental requirement data is detected on the basis of the ascertained image data and by undertaking a database query, or else a data stock query. These queries are made in the form of automated process steps.

This allows obtaining ascertained environmental impact data. This ascertained data is subsequently transmitted to the interface computer.

The interface computer is connected directly or indirectly to the sorting installation.

In a preferred embodiment the interface computer transmits the result data to a result memory of the sorting installation.

The physical objects are preferably associated with the corrected address information by detecting an identification code that identifies the.

Preferably, the identification code was applied onto the physical object in order to allow an association of the new address with the correct physical object,

The identification code makes it possible to associate each of the physical objects with the appertaining environmental requirement data. In an especially preferred embodiment, this is done in that identification codes printed on the physical objects are detected.

It is especially advantageous to print the identification code and/or the environmental requirement data on the physical object.

The printing can be done directly onto the physical object or else by printing a label that is subsequently affixed onto the physical object,

The described implementations of the invention help to analyze environmental impact of transport procedures.

This allows to create a transport system for transporting physical objects, wherein at least one physical object is transported from a sending station to a receiving station, wherein the transport occurs through at least one physical router, wherein the physical router executes a decision about further parameters of transport to another physical router or to the receiving station, wherein environmental data of the transport is calculated and displayed.

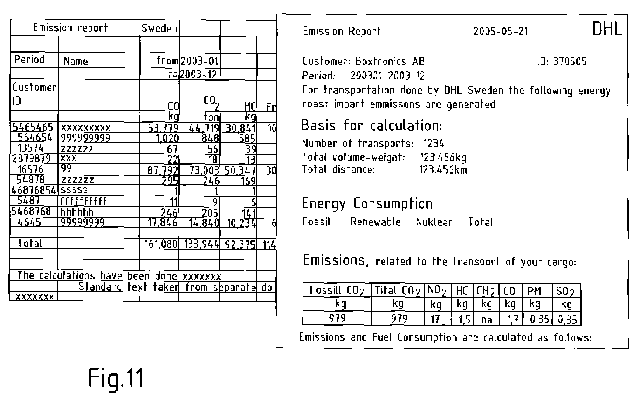

Fig. 11 shows an example of output data (emission report) generated according to a preferred embodiment of the invention.

Advantageous Processing Rules for Emission calculations are described afterwards:

The basic principle in the calculations is that the emissions reported to the customer should be calculated down to each transport, considering utilization and capacity of the vehicle.

For international shipments the emissions are managed on country level, i.e. that when a border is passed, the emissions are split equally and allocated to each country.

In ACCEPT there is one fundamental calculation method, used for the highest level of accuracy, this model is defined as follows in a 4-step approach:

For each leg of the transport the following is calculated and then summarized in the reports:

**1.** Calculate the distance
**2.** Calculate the fuel consumption of the vehicle
**3.** Calculate the emissions, depending of vehicle/engine type
**4.** Allocate the emissions, based on load capacity and fill factor
**5. Calculate emissions resulting from facilities involved**

The actual calculations can be managed in three different ways, depending on the available data in each country:

**1. Manually**, using parameters from ACCEPT
The distance is calculated for each transaction[1] using external web products, and then the distance is multiplied with the weight giving the transport work in tonkm. Based on this an "average fleet" can be calculated and then used for the respective customers calculations. For details see appendix F: Current Business Process Map.
[1] Experience from SE shows that certain customers may have 20.000 or more transactions per quarter.

**2. Automatically**

a. Calculate based on average fleet values, **"Level 3"**

b. Calculating fleet average is done by finding out the different vehicle types and their relative part of the total transport work done in the country.
Based on this an "average fleet" can be calculated and then used for the respective customers calculations. For details see appendix F: Current Business Process Map.

c. Calculate based on each vehicle, **"Level 6"**
These calculations are the full value of ACCEPT, level 6 demands a tool which has control of the whole transport chain, down to vehicle level, giving a detailed calculation according to NTM level 3 and verifiable by third part.

Calculating emissions, principles

**Transports**

The calculations of transports are done as follows, the same model applies for Road and Air. When calculating Road there is today no Fixed Emission Value:

**Emissions for customer =**

**((Volume Weight / (Max Load Weight * Fill Factor)) * (Fixed Emission Value + Variable Emission Value * Distance)) * Fuel Consumption**

where

**Fuel consumption**
Is gathered, in this order, from the vehicle, vehicle type or more generic parameters

**Customer part of Vehicle utilization**
Calculated as the shipments part of the total available weight capacity and with reference to actual utilization of vehicle

**Volume Weight / (Max Load Weight * Fill Factor)**

**Emission factor**
Calculated as the sum of fixed emission values and variable values.
The fixed values derive from calculating Air transactions and are set to zero for Road calculations. The variable value is depending of the distance, thus the multiplication

**Fixed Emission Value + Variable Emission Value * Distance**

**Error Management**
If data is missing or not correct, ACCEPT either stops the update of this transaction and creates an error message, or uses a less accurate
value e.g. using generic Vehicle Type instead the actual vehicle.

**Real estate and facilities**

Emission from e.g. energy usage in facilities can contribute significantly to the emission footprint of a shipment. The functionality to handle real estate calculations were not within the original scope of ACCEPT, but will need to be developed as a prioritized extension. See further discussion under chapter 11 future opportunities. The external partner S.E.P has a model similar to the NTM model for transports; this model is described in attachment J; Emission calculation on real estate. See also chapter 11 Opportunities.
The calculations of real estate are not within the original scope of ACCEPT, but the external partner S.E.P has a model similar to the NTM model for transports, this model is described in attachment J: Emission calculation on real estate. See also chapter 11 Opportunities.

Calculating emissions

Within ACCEPT is planned a Quality Index, in order to monitor the continuous improvement required.
At this stage we use two levels for implementing;

- Level 3, based on more generic data
- Level 6, based on detailed vehicle data

**Calculating Road emissions**

**Level 3, based on generic data**

Using Level 3 the calculations are gathered from the production systems and the transport work is calculated.

# EP 1 818 863 A1

This transport work is then multiplied with a more generic emission factor which is set from calculating the emissions from the fleet used in the country.

As an example, Sweden will use figures stated in Table 5-5; where the rows represent the different vehicle types used;

• As an example, Sweden will use figures like these; where the columns represent the different vehicle types used;

• For each vehicle type is shown the total transportation work done, in absolute tonkm and in %

• The capacity, Net Load ton, is calculated by multiplying the Max Load with the Utilization factor for DHL. The NTM standard value is indicated in the table.

• The fuel consumption is taken from NTM values.

| | Vehicle type | Part of total | | Max load ton | Net Load ton | Utilization | | Fuel consumption | |
|---|---|---|---|---|---|---|---|---|---|
| | | k tonkm | % | | | NTM | DHL | l/km | l/tonkm |
| H/D | Delivery van Distribution lorry - | 0 | 0% | 1.5 | 0.75 | 50% | 50% | 0,15 | 0.2000 |
| H/D | Urban Distribution lorry - | 0 | 0% | 8 | 4 | 50% | 50% | 0.25 | 0.0625 |
| HID | Rural Heavy distribution | 0 | 0% | 8 | 4 | 50% | 50% | 0.25 | 0.0625 |
| H/D | lorry - Urban Heavy distribution | 66,167 | 19% | 14 | 7 | 50% | 50% | 0.3 | 0.0429 |
| H/D | lorry - Rural | 0 | 0% | 15 | 7.5 | 50% | 50% | 0.3 | 0.0400 |
| LTL | Lorry + semi-trailer | 231.985 | 66% | 40 | 36.8 | 75% | 92% | 0.45 | 0.0122 |
| LTL | Tractor + semi-trailer | 25,776 | 7% | 28 | 21 | 75% | 75% | 0,38 | 0.0181 |
| LTL | Train | 30,058 | 8% | | | 50% | 50% | | |
| | Total | 353,987 | 100% | | | | | | |

These are the basic data used for a first country, e.g. Sweden, where the total transport work is split by vehicle type (and performance) and their part of the total.

### Level 6, based on detailed vehicle data

Using Level 6 the transactions/data are gathered from the productions systems and the transport work is calculated. This transport work is then multiplied with the specific vehicle used, considering Euro class, fuel consumption, utilization etc, giving a high quality calculation matching the demands from the more demanding customers. Level 6 calculation requires a subsystem that can feed ACCEPT with the relevant data on vehicles such as e.g. the environmental index used

In real production environment the calculations will vary from level 3 to 6, giving a result that is much better than level 3 but with less quality than a pure level 6. All this depending on the fact that the transactions from production not always meet the need for level 6 reporting, e.g. COSP does not always identify the vehicle.

For specific customers, depending on their routes, a genuine level 6 quality might be achieved if all transactions are detailed enough.

For specific customers, depending on their routes, a genuine level 6 quality might be achieved if all transactions are detailed enough.

### Calculating Air emissions

Calculating Air emissions are done by from the actual shipment transactions. These transactions include origin and destination, but not the transactions in between. Thus ACCEPT uses a table, CSD, that specifies the different legs in the shipment, as they are planned, deviations from this plan might happen and are not managed by ACCEPT. If there are more than 5 "legs" in a shipment (which is rare) then ACCEPT calculates the last "leg as from last known origin to destination.

**Level 3, based on generic data**

Using Level 3 the calculations are gathered from the production systems and the transport work is calculated. This transport work is then multiplied with a more generic emission factor which is set from calculating the emissions from the fleet used in the country, or for DHL Europe.

**Level 6, based on detailed vehicle data**

Using Level 6 the transactions/data are gathered from the productions systems and the transport work is calculated. This transport work is then multiplied with the specific vehicle used, considering air plane type, fuel consumption, utilization etc, giving a high quality calculation matching the demands from the more demanding customers. Level 6 calculation requires a subsystem that can feed ACCEPT with the relevant data on vehicles such as e.g. the environmental index [2] used in a certain region, especially a country, e.g. Sweden,

In real production environment the calculations will vary from level 3 to 6. giving a result that is much better than level 3 but with less quality than a pure level 6. All this depending on the fact that the transactions from production do not always meet the need for level 6 reporting.

**Calculating Rail emissions**

Rail emissions are not within the scope for the first release of ACCEPT.

The calculations will though be calculated in a similar way as Road and Air, using NTM methodology and values. The major challenge will probably be to retrieve information of or which parts of a transport train is used.

**Calculating Sea/Ocean emissions**

Sea/Ocean emissions are not within the scope for the first release of ACCEPT. The calculations will though be calculated in a similar way as Road and Air, using appropriate methodology and values.

Emissions managed

The values shown in ACCEPT reports are the following:

| | |
|---|---|
| **CO** | Carbon oOxide |
| **$CO_2$** | Carbon dDioxide |
| **HC** | Hydrocarbons |
| **$NO_x$** | Nitrogen Ooxides |
| **PM** | Particulate mMatter |
| **$SO_2$** | Sulphur dDioxide |
| **Energy** | Total consumption usage in kWh Can also be split into Nuclear and Fossil |
| **Tonkm** | Transport work done |
| **kKm** | Total distance driven |
| **Number** | of shipments |
| **kKg** | Total weight handled |

For each item the value shown can be scaled in order to be more relevant, e.g. it might be more relevant to show emissions in kg instead of gram,

This is managed by setting parameters.

**External Interfaces**

Using ACCEPT requires external interfaces to existing production systems.

Due to the demands from the users the update interval is not more frequent than monthly.

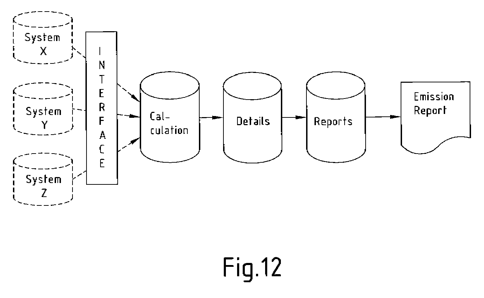

Figure 12 shows how transactions from different operational systems are managed via a defined interface, where the transactions are updated/corrected/verified before they are entered in to the detail database, From this database is then report material created.

*Air transactions*

For air transports there is a global solution, which can deliver transactions facilitating the implementation of ACCEPT, when one country is up and running, all other countries are easily adhered.

During the pilot these transactions are handed over manually by DHL Aviation in Brussels, via e-mail or getting the information on the intranet (CSD).

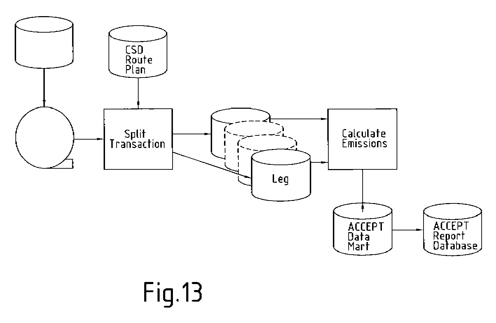

Figure 13 shows how the Air transactions from the production system are managed via a Transaction Extract. The transaction is split, using the information in the CSD, generating a number of individual "legs" for which the emissions are calculated. These emissions are stored in the Data Mart (the same as for Road) and form the base for ACCEPT Report Database.

Transactions not accepted in the update are stored in a log file and an error message created. When the error is corrected they will be updated.

For a more detailed description, se appendix L; Road update from Air.

Road transactions

For the road transportations the situation is more complex, most countries have their own system(s), probably requiring a unique interface for each of them. In order to define the interface and estimate the cost, a pre study has to be done in each country.

ACCEPT is constructed in order to be as flexible as possible; all interfaces are planned for accepting a multiple of input systems. In the pre study mentioned will be decided how to interface the local production system, whether the major part of interface should be done on the production side or on the ACCEPT side.

The administration of interface to several systems is depending of the interface as described above, the aim is that the different production systems automate their deliveries to ACCEPT with ACCEPT administration monitoring the deliveries and updating the system. During the implementation the transaction hand over is done via a CD. in a permanent solution it will be done via an Out Area as described here.

Preferred embodiments of the invention allow integrating transportation means, characterized in that they contain means for transmitting environmental performance data of the transportation means to a logical node.

A logical node is any device that can be integrated in a computer network. Nodes can be computers, personal digital assistants (PDAs), cell phones, or various other network appliances.

On an IP (Internet Protocol) network, a logical node is any device with an IP address.

Logical nodes are often times connected by hubs, logical routers, or by a network switch.

The examples are combinable with physical routers, capable of executing a decision about parameters of transport to another physical router or to a receiving station, characterised in that a logical node is assigned to the physical router, wherein the decision is taken according to environmental data.

To carry out these embodiments efficiently it is advantageous to implement at least one computer program, capable of controlling a message for transporting physical objects, wherein the transport occurs through at least one physical router, wherein the physical router executes a decision about further parameters of transport, characterised in that the computer program takes the decision according to environmental data,

For further increasing the efficiency and speed for involving the environmental data, an aspect of the invention concerns a computer program product, characterised in that it contains one of the described computer programs. Preferable the computer program product is loadable in the logical node.

The descriptions for representation of data are always combinable with the examples for routing and/or transporting the physical objects.

Therefore the invention includes information system as well as routing and transporting systems.

It is absolutely understandable that parts of the invention can be use together or alternatively separately.

It is especially advantageous to use transportation means, the physical router, the computer program or the computer program product according to the invention independently or in combination with one or more of the other parts of the present invention.

This allows obtaining ascertained environmental impact data and using it for a transport optimized with regard to calculated environmental impact data.

**Claims**

1. Method for transporting physical objects, wherein at least one physical object is transported from a sending station to a receiving station, wherein the transport occurs through at least one physical router, wherein the physical router executes a decision about further parameters of transport to another physical router or to the receiving station,
**characterised in**
**that** information for handling and moving the physical object is generated and/or implemented in the decision about the further parameters of transport with reference to environmental data.

**2.** The method according to claim 1, **characterised in that** the environmental impact data accompanied the physical objects.

**3.** The method according to claim 1 or claim 2. **characterized in that** the physical objects are accompany by environmental requirements data.

**4.** The method according to any of the claims 1 to 3, **characterized in that** at least a part of the environmental impact data is included in a computer that stears function of at least one of the physical routers.

**5.** The method according to any of the claims 1 to 4, **characterized in that** a computer connected to the physical router is capable of combining environmental impact data of transportation means with transportation relevant parameters of the physical objects.

**6.** Transportation system for transporting physical objects, wherein at least one physical object is transported from a sending station to a receiving station, wherein the transport occurs through at least one physical router, wherein the physical router executes a decision about further parameters of transport to another physical router or to the receiving station, wherein environmental data is used for handling and/or moving at least one physical object.

**7.** Transportation systems according to claim 6, **characterized in that** at least one physical router is located in a cargo centre.

**8.** Transportation system for transporting physical objects, wherein at least one physical object is transported from a sending station to a receiving station, wherein the transport occurs through at least one physical router, wherein the physical router executes a decision about further parameters of transport to another physical router or to the receiving station, wherein environmental data of the transport is calculated and displayed.

**9.** Transportation means, **characterized in that** they contain means for transmitting environmental performance data of the transportation means to a computer or a logical node.

**10.** Physical router, capable of executing a decision about parameters of transport to another physical router or to a receiving station, **characterised in that** a logical node is assigned to the physical router, wherein the decision is taken with regard to environmental data.

**11.** Computer program, capable of controlling a message for transporting physical objects, wherein the transport occurs through at least one physical router, wherein the physical router executes a decision about further parameters of transport, **characterised in that** the computer program takes the decision according to environmental data.

**12.** Computer program product, **characterised in that** it contains a computer program as it is described in claim 11 and that it is loadable in a logical node.

System Overview

Data Gathering

ex-DHL

ex-Danzas — Rasti — NPS
Plus 2000 — Exact

Air&Ocean

Logis Air — Logis Sea

Update/Calculate

Calculate ←→ Param

Calculate ←→ Param

Calculate ←→ Param

Store

Emission Report DW

EOSP

Retrieve/Report
Periodic Reports

- Client
- Transportation
- Country
- Period
- Shipment?

Queries
w.w.w.

Flexible, platforms can easily be addeded/replaced

Fig.1

Fig.2

Fig.3

Fig.4

BO

DM_ACCEPT

spDM_LoadShipment

spDM_LoadD

spDMPrepareLoadShipment

ACCEPT

spLoadCityCityDistance

spLoadCustomer

spLoadShipment

spLoadTransport

spLoadOperatorVehicle

spLoadNodeLeg

Fig.5a

Fig.5b

**DHL**

| Products/Services | eShipping | Tools | Information | Press | Careers | About DHL |

▲ Corporate Information | ▲ Investor Relations

## Welcome to DHL Global

Good Afternoon

▲ Contact
- ▲ Site Map
- ▲ Personalise
- ▲ Help

▲ Go

Welcome to the new DHL web site. Deutsche Post World Net, owner of DHL, has now placed all worldwide express and logistics under one brand. This has seen Danzas and Deutsche Post Euro Express join forces with DHL, meaning DHL is now providing total express logistics and freight solutions from a single source.

Select your Country
Corporate ▽

**Useful Tools**
- ▲ Service Bulletins
- ▲ Press Releases
- ▲ Corporate Citizenship
- ▲ Air Waybill Guide
- ▲ eSolutions
- ▲ Local Information
- ▲ E-Mail Contact

**Transaction Information**
DHL acquires Airborne, Inc. ground operations

**The New DHL**
▲ Customer interaction with the new DHL

**Services A to Z**
▲ Find specific services immediately with out A-Z guide

**DHL Web Shipping**
▲ Our online comprehensive shipment processing tool.

**Track Your Shipments**
- ▲ DHL Online Tracking
- ▲ Danzas Track & Trace
- ▲ Euro Express TrackNet

**Drop-off Locators**
▲ Find the nearest DHL office

**Trade Automation Service**
▲ On-line trade & customs information for international shipping

DHL Fast Track
DHL Air Waybill
▲ Go ▲ Other tracking options

Emission Report

Fig.6

DHL

Welcome to Environmental Report

Help

Need to ask about something?    User ID    [_____]
Contact our Helpdesk            Company    [_____]
Open weekdays xxxxxxxxxxx       Password   [_____]
xx                                         [Log in]
x

# Fig.7

```
┌─────────────────────────────────────────────────────────────────────────┐
│ DHL                                                                       │
│ ┌──┬──────────────────────────────────────────────────────────────────── │
│ │  │ User ID          Peter Egmont                        Help           │
│ │  │ Company          Terraverse                                         │
│ │  │                                                                     │
│ │  │                                                                     │
│ │  │ Available Customer IDs                                              │
│ │  │                                                                     │
│ │  │    ○  73907503  Xdfggsgsg                                           │
│ │  │    ○  21566542  JKhfgjfj                                            │
│ │  │    ○  54894546  Ikjsiojkj                                           │
│ │  │    ○  45689212  Kokkfkjg                                            │
│ │  │    ○  54987798  Möokkfd                                             │
│ │  │ Select which Customer IDs to be included in report                  │
│ │  │                                                                     │
└─────────────────────────────────────────────────────────────────────────┘
```

```
┌─────────────────────────────────────────────────────────────────────────┐
│ DHL                                                                       │
│ ┌──┬──────────────────────────────────────────────────────────────────── │
│ │  │ User ID          Peter Egmont                        Help           │
│ │  │ Company          Terraverse                                         │
│ │  │                                                                     │
│ │  │                                                                     │
│ │  │ Available Reports                                                   │
│ │  │                                                                     │
│ │  │    ○  Emission Report, detailed, all Transport types                │
│ │  │    ○  Emission Report, aggregated, all Transport types              │
│ │  │    ○  Emission Report, Transportation Type                          │
│ │  │    ○  Emission Report, Region                                       │
│ │  │    ○  Emission Report, per country                                  │
│ │  │                                                                     │
│ │  │ Select which reports to be generated                                │
└─────────────────────────────────────────────────────────────────────────┘
```

# Fig.8

DHL

| | | | |

User ID           Peter Egmont              Help
Company           Terraverse

Available Output formats

    O   Display on screen
    O   WORD format
    O   EXCEL format
    O   File, separated by comma
    O

Select Output Format

# Fig.9

DHL

User ID           Peter Egmont              Help
Company           DHL

Table:     Emission

ID:        Engine Model ID:   HQ345
          Emission Type ID:  $CO_2$
          Fuel Mix ID:      Diesel MK2

Emission Value:   47,65

# Fig.10

EP 1 818 863 A1

| Emission report | | Sweden | | | |
|---|---|---|---|---|---|
| Period | Name | from | 2003-01 | | |
| | | to | 2003-12 | | |
| Customer ID | | CO kg | CO₂ ton | HC kg | En |
| 5465465 | xxxxxxxxx | 53,779 | 44,719 | 30,841 | 16 |
| 564654 | 999999999 | 1,020 | 848 | 585 | |
| 13574 | zzzzzz | 67 | 56 | 39 | |
| 2879879 | xxx | 22 | 18 | 13 | |
| 16576 | 99 | 87,792 | 73,003 | 50,347 | 30 |
| 54878 | zzzzzz | 295 | 246 | 169 | |
| 46876854 | sssss | 1 | 1 | 1 | |
| 5487 | ffffffffff | 11 | 9 | 6 | |
| 5468768 | hhhhhh | 246 | 205 | 141 | |
| 4645 | 99999999 | 17,846 | 14,840 | 10,234 | 6 |
| Total | | 161,080 | 133,944 | 92,375 | 114 |
| The calculations have been done xxxxxxx | | | | | |
| | Standard tekt taken from separate do | | | | |
| xxxxxxx | | | | | |

Emission Report                      2005-05-21          DHL

Customer: Boxtronics AB                    ID: 370505
Period:   200301-2003 12
For transportation done by DHL Sweden the following energy coast impact emmissons are generated

## Basis for calculation:

Number of transports:  1234
Total volume-weight:   123.456kg
Total distance:        123.456km

## Energy Consumption

Fossil    Renewable    Nuklear    Total

**Emissions,** related to the transport of your cargo:

| Fossill CO₂ | Tital CO₂ | NO₂ | HC | CH₂ | CO | PM | SO₂ |
|---|---|---|---|---|---|---|---|
| kg | kg | kg | kg | kg | kg | kg | kg |
| 979 | 979 | 17 | 1,5 | na | 1,7 | 0,35 | 0,35 |

Emissions and Fuel Consumption are calculated as follows:

## Fig.11

Fig.12

Fig.13

**European Patent Office**

**DECLARATION**

which under Rule 45 of the European Patent Convention shall be considered, for the purposes of subsequent proceedings, as the European search report

Application Number

EP 05 02 8083

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason: | INV. G06Q10/00 |

The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-3.

The problems which are addressed do not appear to require a technical, but rather an administrative/organisational, or business, solution. The implementation of this solution may include the use of generic technical features, however these do not interact to solve any overall technical problem but merely serve their well-known functions.

The applicant's attention is drawn to the fact that a search may be carried out during examination following a declaration of no search under Rule 45 EPC, should the problems which led to the declaration being issued be overcome (see EPC Guideline C-VI, 8.5).

-----

| Place of search | Date | Examiner |
|---|---|---|
| Munich | 27 April 2006 | Anastasov, Y |

EPO FORM 1504 (P04C37)

**EP 1 818 863 A1**

**REFERENCES CITED IN THE DESCRIPTION**

**Patent documents cited in the description**

- WO 03035282 A2
- EP 1455959 A
- WO 03048986 A2
- US 20050021389 A1
- US 200510052810 A1